# EUROPÄISCHE PATENTSCHRIFT

(11) **EP 1 650 071 B1**
(45) Veröffentlichungstag und Bekanntmachung des Hinweises auf die Patenterteilung: **25.03.2009**
(21) Anmeldenummer: 05022102.7
(22) Anmeldetag: 11.10.2005
(51) Int. Cl.: F16H 29/04, H02K 7/18, B60K 17/04

(54) **Antriebsanordnung**
Drive arrangement
Agencement d'actionnement

(30) Priorität: 22.10.2004 DE 102004051473
(43) Veröffentlichungstag der Anmeldung: 26.04.2006
(73) Patentinhaber: LuK Lamellen und Kupplungsbau Beteiligungs KG, 77813 Bühl (DE)
(72) Erfinder: Haas, Wolfgang, 77815 Bühl (DE); Friedmann, Oswald, 77839 Lichtenau (DE); Mair, Ulrich, 88046 Friedrichshafen (DE); Reik, Wolfgang, Dr., 77815 Bühl (DE); Scheufler, Christian, Dr., 77815 Bühl (DE)

(56) Entgegenhaltungen:
- EP-A- 0 392 807
- WO-A-00/58121
- DE-A1- 2 342 019
- DE-A1- 10 243 533
- GB-A- 132 628
- US-A- 3 799 284
- US-B1- 6 537 168
- "VARIABLE-ECCENTRIC CVT" AUTOMOTIVE ENGINEER, PROFESSIONAL ENGINEERING PUBLISHING, LONDON, GB, Bd. 18, Nr. 2, 1. April 1993 (1993-04-01), Seite 57, XP000364735 ISSN: 0307-6490
- PATENT ABSTRACTS OF JAPAN Bd. 1996, Nr. 11, 29. November 1996 (1996-11-29) -& JP 08 175476 A (YAMAHA MOTOR CO LTD), 9. Juli 1996 (1996-07-09)

## Beschreibung

Die Erfindung betrifft eine Antriebsanordnung für ein Kraftfahrzeug, wie z.B. einen Personenkraftwagen oder ein Zweirad, insbesondere einen Roller. Die Antriebsanordnung enthält wenigstens ein von einem Motor antreibbares Getriebe mit einer mit dem Motor kuppelbaren, antreibenden Welle, z.B. einer Getriebeeingangswelle, sowie wenigstens einer getriebenen Welle, z.B. einer Getriebeausgangswelle, welche antriebsmäßig miteinander verbunden sind.

Ein Getriebe für eine derartige Antriebsanordnung ist beispielsweise durch die DE 102 43 533 A1 vorgeschlagen worden. Bei diesem Getriebe ist auf einer von einem Motor antreibbaren Eingangswelle, die im Bezug auf das Getriebe eine antreibende Welle bildet, eine verstellbare Exzenterantriebsanordnung vorgesehen, die über pleuelähnliche Verbindungselemente mit einer getriebenen Welle verbunden ist, welche im Bezug auf das Getriebe eine Ausgangswelle bildet. Die getriebene Welle wird mittels Freilaufeinrichtungen angetrieben, die zwischen den Verbindungselementen und dieser Welle vorgesehen sind. Zur Gewährleistung einer sicheren Betriebsweise eines Kraftfahrzeugs und eines energiesparenden Betreiben des Kraftfahrzeugs enthält die in der DE 102 43 533 A1 vorgeschlagene Anordnung ferner eine elektrische Maschine, die über Kupplungsmittel wahlweise nur mit der Abtriebsseite des Getriebes oder nur mit dem Motor oder aber gleichzeitig mit der Abtriebsseite und dem Motor antriebsmäßig verbindbar ist. Die Abtriebsseite des Getriebes wird dabei durch eine getriebene Welle und der Motor durch eine Brennkraftmaschine gebildet. Die den Rotor der elektrischen Maschine mit der Abtriebsseite des Getriebes und/oder mit dem Motor verbindenden Kupplungsmittel sind beispielsweise durch Freiläufe oder durch formschlüssige Kupplungen, beispielsweise Zahnkupplungen oder reibschlüssige Kupplungen, gebildet.

Aus der internationalen Patentanmeldung WO00/58121 ist ein Motorrad mit Hybridantrieb und Bremsenergierückgewinnung bekannt. Der Antrieb besteht aus einer Vierzylindermaschine, einer umschaltbaren elektrischen Maschine, die mit der Vierzylindermaschine durch synchronisierte Kupplungen verbunden ist sowie Energiespeichermitteln, die mit der genannten umschaltbaren elektrischen Maschine verbunden sind, einem Prozessor und einer Steuerschaltung für den Antriebsprozess. Als Getriebe kann ein Umschlingungsmittel-CVT verwendet werden, dessen getriebene Welle eine angetriebene Achse des Motorrads ist.

Davon ausgehend liegt der Erfindung die Aufgabe zugrunde, Antriebsanordnungen der eingangs genannten Art derart weiterzuentwickeln, dass sie für verschiedene Arten von Kraftfahrzeugen einen zuverlässigen Betrieb ermöglichen, wobei eine kompakte Ausgestaltung der Antriebsanordnung beibehalten wird.

Diese Aufgabe wird mit einer Antriebsanordnung mit einem stufenlos verstellbaren Getriebe mit den Merkmalen des Anspruchs 1 oder 14 gelöst. Bevorzugte Ausgestaltungen sind in den abhängigen Ansprüchen angegeben.

Der wesentliche Aspekt der Erfindung liegt einerseits darin, für jedes der angetriebenen Räder des Kraftfahrzeugs, beispielsweise das Hinterrad eines Zweirads oder beide Vorderräder eines Pkw bzw. bei Allrad-Fahrzeugen alle vier Räder, jeweils eine eigene, vorzugsweise unabhängig von den anderen Einheiten verstellbare Getriebeeinheit vorzusehen. Dadurch wird einerseits die Verwendung eines Kurbelgetriebes für ein Zweirad möglich, wenn die getriebene Welle des Getriebes gleichzeitig die Radachse des angetriebenen Rads (Hinterrads) ist. Andererseits kann bei der Anwendung im Pkw oder einem Nutzfahrzeug das Differential zur Verteilung des Drehmoments auf die angetriebenen Räder entfallen, ohne dass eine Dämpfungseinrichtung zum Ausgleich von Momentenschwankungen zwischen den angetriebenen Rädern vorgesehen werden muss. Vielmehr kann dadurch an jedem Rad das gewünschte Abtriebsmoment eingestellt werden, wenn für jede Getriebeeinheit eine eigene, unabhängige Verstelleinrichtung vorgesehen ist. Dies ermöglicht es, dass das Getriebe die Funktion einer Differentialsperre bzw. von Fahrstabilisierungen mit übernimmt. Somit wird eine kompakte Getriebebauweise sichergestellt, ohne dass Funktionalität verloren geht.

Außerdem liegt ein weiterer wesentlicher Aspekt der Erfindung darin, bestimmte Bauteile nicht doppelt bzw. mehrfach vorzusehen, sondern sie gemeinsam durch zumindest zwei Getriebeeinheiten zu nutzen. Beispielsweise kann der Stator eines Elektromotors an der getriebenen Welle als Schubmotor zum Erzeugen eines Bremsmoments einfach für zwei nebeneinander angeordnete Getriebe vorgesehen werden, während jedem Getriebe ein eigener Rotor zugeordnet ist, so dass eine kompakte Bauweise der Getriebeanordnung erzielt werden kann.

Ein weiterer wesentlicher Aspekt der Erfindung liegt darin, dass die Freilaufeinheiten für z.B. bei der Erfindung verwendete Kurbelgetriebe derart weiterentwickelt werden, dass eine zuverlässige Funktionsweise des Freilaufs gewährleistet ist. Dies beinhaltet insbesondere, dass die eindeutige Lage der Klemmkörper auch bei hohen Schaltfrequenzen gesichert ist, um jeweils ein zuverlässiges in Eingriff bringen des Freilaufs zu gewährleisten und damit Schlupf im Freilauf zu verhindern.

Es wird explizit festgehalten, dass die Weiterentwicklungen der Komponenten der Kurbelgetriebe, wie sie hier offenbart sind, auch für Kurbelgetriebe anderer Bauart angewendet werden können und ihre Anwendung nicht auf die hier beschriebenen Kurbelgetriebe beschränkt ist.

Nachfolgend wird die Erfindung anhand von Beispielen gemäß den beigefügten Figuren beschrieben, in denen:
- Figur 1: eine Antriebsanordnung für ein Fahrzeug mit zwei angetriebenen Rädern zeigt;
- Figur 2: ein Querschnitt durch die Antriebsanordnung entlang der Linie A-A in Figur 1 ist;
- Figur 3: schematisch die Anordnung der Antriebsanordnung 1 für ein Fahrzeug mit Hinterradantrieb zeigt;
- Figur 4: eine Anordnung für ein Fahrzeug mit Frontantrieb zeigt;
- Figur 5: eine Antriebsanordnung für ein Fahrzeug mit Allradantrieb zeigt;
- Figur 6: eine alternative Antriebsanordnung für ein Fahrzeug mit Frontantrieb zeigt;
- Figur 7: eine weitere alternative Antriebsanordnung für ein Fahrzeug mit Fronantrieb zeigt;
- Figur 8: noch eine weitere alternative Antriebsanordnung für ein Fahrzeug mit Frontantrieb zeigt;
- Figur 9: noch eine weitere alternative Antriebsanordnung für ein Fahrzeug mit Frontantrieb zeigt;
- Figur 10: schematisch eine Antriebsanordnung für ein Zweirad zeigt;
- Figur 11: eine Querschnittsansicht durch ein Kurbelgetriebe für ein Zweirad zeigt;
- Figur 12: eine Seitenansicht eines Teils des in Figur 11 dargestellten Kurbelgetriebes ist;
- Figur 13: eine Querschnittsansicht durch eine alternative Ausführungsform eines Kurbelgetriebes für ein Zweirad zeigt;
- Figuren 14a und: eine erste Ausführungsform eines Anschlags zwischen Verstellwelle und antreibender Welle eines erfindungsgemäßen Kurbelgetriebes zeigen;
- Figuren 15a und 15b: eine weitere Ausführungsform des Anschlags zeigen;
- Figuren 16a bis 16f: verschiedene Ausführungsformen für ein Auge eines Verbindungselements zwischen antreibender Welle und getriebener Welle eines Kurbelgetriebes sind;
- Figur 17: in Querschnittsansicht eine Verbindung zwischen einem Aktor für eine Verstellwelle und einer elektrischen Maschine in einem Kurbelgetriebe gemäß der Erfindung zeigt;
- Figur 18: eine Seitenansicht auf einen Ausschnitt aus Figur 17 ist;
- Figur 19: schematisch eine Freilaufeinrichtung für ein erfindungsgemäßes Kurbelgetriebe zeigt;
- Figur 20: eine Explosionsansicht der Freilaufeinrichtung ist;
- Figur 21: ein Umschaltelement für eine erfindungsgemäße Freilaufeinrichtung zeigt;
- Figur 22: eine Modifikation der Umschalteinrichtung aus Fig. 21 zeigt;
- Figur 23: eine weitere Modifikation der Umschalteinrichtung zeigt;
- Figur 24: noch eine Modifikation der Umschalteinrichtung zeigt;
- Figur 25: noch eine weitere Modifikation der Umschalteinrichtung zeigt;
- Figur 26: noch eine Modifikation der Umschalteinrichtung zeigt;
- Figur 27: eine weitere Modifikation der Umschalteinrichtung zeigt;
- Figur 28: eine Schaltanordnung zum Schalten von mehreren Schaltelementen gleichzeitig zeigt;
- Figur 29: eine perspektivische Ansicht einer Schaltanordnung für mehrere Freilaufeinrichtungen ist;
- Figur 30: eine weitere Ausführungsform einer Freilaufeinrichtung zeigt;
- Figur 31: eine Modifikation der Freilaufeinrichtung aus Figur 30 ist;
- Figur 32: eine weitere Modifikation der Freilaufeinrichtung ist;
- Figur 33: noch eine Modifikation der Freilaufeinrichtung ist; und
- Figur 34: noch eine Modifikation der Freilaufeinrichtung zeigt.

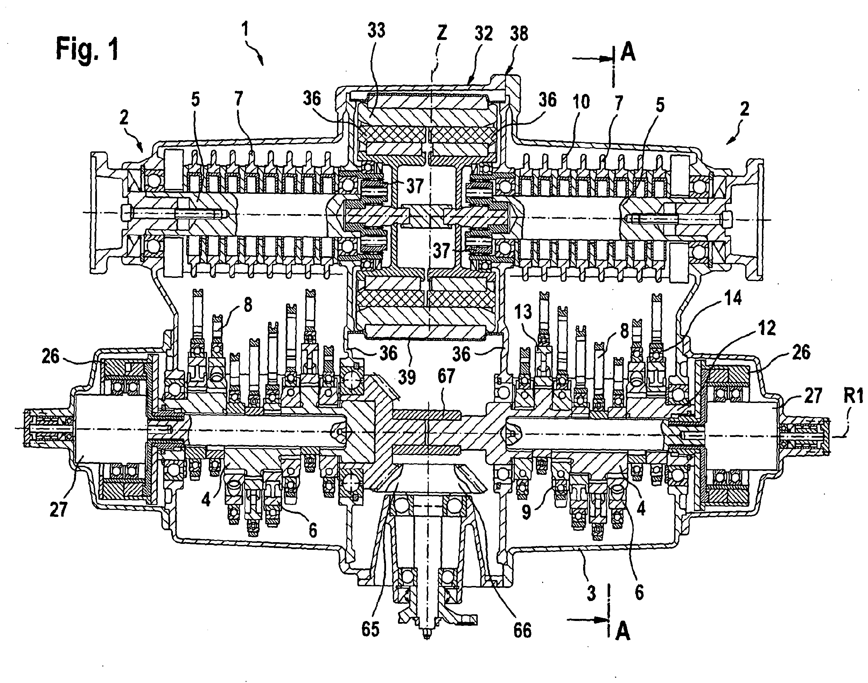

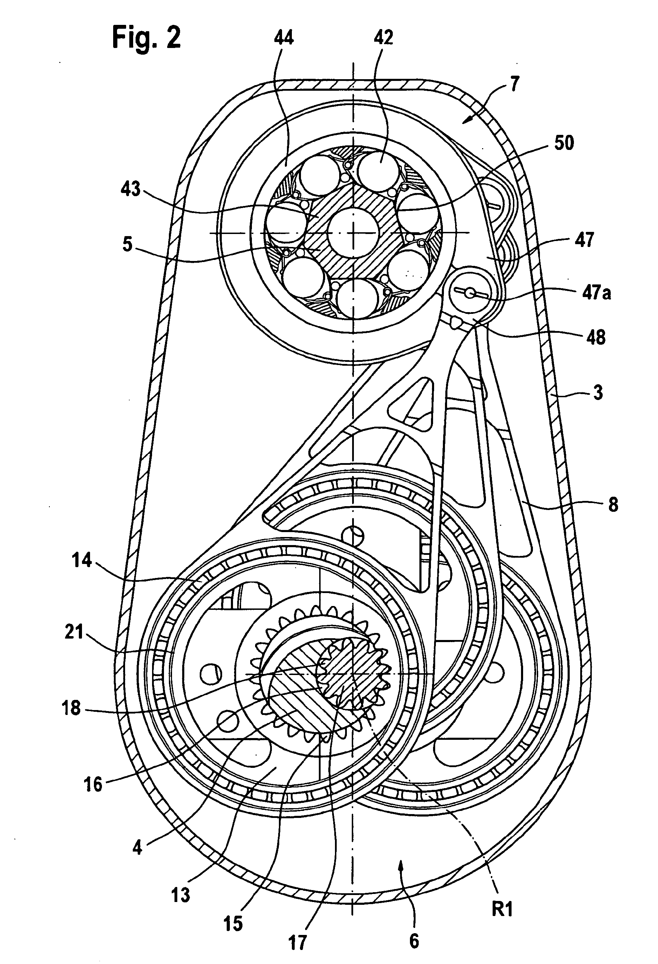

In Figuren 1 und 2 ist in zwei Querschnittsansichten eine Antriebsanordnung 1 dargestellt, die zwei zueinander symmetrisch bezüglich der Achse Z angeordnete Getriebe 2 enthält. Die Getriebe 2 sind in einem gemeinsamen Gehäuse 3 untergebracht.

Jedes der Getriebe 2 ist als Kurbelgetriebe ausgebildet und enthält eine antreibende Welle 4 und eine getriebene Welle 5, die im Gehäuse 3 jeweils verdrehbar gelagert und parallel zueinander ausgerichtet sind. Die antreibenden Wellen 4 beider Getriebe 2 sind zueinander koaxial. Ebenso sind die getriebenen Wellen 4 beider Getriebe 2 zueinander koaxial.

Die antreibende Welle 5 und die getriebene Welle 4 von jeweils einem Getriebe 2 sind antriebsmäßig miteinander verbunden. Diese Verbindung erfolgt mittels eines auf der antreibenden Welle 4 vorgesehenen Exzenterantriebs 6 und einer auf der getriebenen Welle 5 vorgesehenen Freilaufeinrichtung 7, die zumindest über ein Verbindungselement 8, welches hier pleuelartig gestaltet ist, miteinander antriebsmäßig verbunden sind.

Der Exzenterantrieb 6 besteht bei dem dargestellten Ausführungsbeispiel aus einer Mehrzahl von um die antreibende Welle 4 axial nebeneinander angeordneten Exzentereinheiten 9. Die Freilaufeinrichtung 7 besteht aus einer Mehrzahl von um die getriebene Welle 5 axial hintereinander angeordneten Freilaufeinheiten 10.

Zur Bildung einer Exzentereinheit 9 besitzt die antreibende Welle 4 einen gegenüber der Rotationsachse R1 dieser antreibenden Welle exzentrisch angeordneten Führungsbereich 12, auf dessen Mantelfläche ein Exzenterbauteil 13 verdrehbar bzw. verschwenkbar gelagert ist. Auf dem Exzenterbauteil 13 ist mindestens ein Verbindungselement 8 verdrehbar bzw. verschwenkbar aufgenommen. Es wird zur Lagerung des Verbindungselements 8 eine Wälzlagerung 14 verwendet, die beispielsweise durch ein einreihiges Kugellager gebildet wird. In Figur 1 ist dargestellt, dass jedes Exzenterbauteil eine Pleuelstange als Verbindungselement 8 zusammen mit der zugehörigen Lagerung aufnimmt. Stattdessen können die ringartig bzw. scheibenartig ausgebildeten Exzenterbauteile 13 auch derart gestaltet sein, dass sie beispielsweise zwei axial nebeneinander angeordnete Pleuelstangen aufnehmen.

Aus Figur 2 ist zu erkennen, dass jedes Exzenterbauteil 13 eine Ausnehmung zur Aufnahme eines Führungsbereichs 12 besitzt. Dabei besitzt das Exzenterbauteil 13 eine um die Ausnehmung gebildete Innenverzahnung 15, die in Bezug auf die äußere Mantelfläche des entsprechenden, exzentrischen Führungsbereichs 12 derart abgestimmt ist, dass das Exzenterbauteil 13 über die den Kopfkreis der Innenverzahnung 15 begrenzenden Abschnitte dieser Innenverzahnung auf dem Führungsbereich 12 zentriert ist.

Die antreibende Welle 4 weist ferner in den die Welle 4 bildenden Führungsbereichen 12 eine sich in Richtung der Achse R1 erstreckende Ausnehmung 16 auf, welche eine Verstellwelle 17 aufnimmt. Die Verstellwelle 17 ist bei dem dargestellten Ausführungsbeispiel in der Ausnehmung verdrehbar gelagert. Sie besitzt eine Außenverzahnung 18, deren Zähne mit den Zähnen der Innenverzahnung 15 des Exzenterbauteils 13 in Eingriff stehen. Die Verstellwelle ist über die den Kopfkreis der Außenverzahnung 18 bildenden Abschnitte dieser Außenverzahnung in der Ausnehmung 16 der antreibenden Welle 4 zentriert bzw. gelagert.

Die Ausnehmungen 16 in den Führungsbereichen 12 der antreibenden Welle 4 sind derart ausgebildet, dass sie über einen bestimmten Winkelbereich offen sind, so dass in diesem Bereich die Verzahnung 18 der Verstellwelle 17 gegenüber der äußeren Mantelfläche der Führungsbereiche 12 radial hervorstehen kann, wodurch ein Eingriff mit der Verzahnung 15 ermöglicht wird (Figur 2).

Die "n" Führungsbereiche 12 eines Getriebes 2 sind vorzugsweise um die Verstellwelle 17 bzw. die Rotationsachse R1 derart verteilt, dass der Winkelversatz zwischen zwei in Umfangsrichtung aufeinander folgenden Führungsbereichen 12 360° geteilt durch "n" beträgt. Bei der in Figur 1 gezeigten Ausgestaltung sind acht Führungsbereiche 12 vorhanden, so dass diese bezüglich einander um einen Winkel von 360°/8 versetzt sind. Die jeweils in Umfangsrichtung der Welle 4 aufeinander folgenden Führungsbereiche 12 müssen sich dabei nicht unmittelbar in axialer Richtung der Verstellwelle 17 bzw. der antreibenden Welle 4 folgen. Die axiale Reihenfolge der einzelnen Führungsbereiche 12 kann entsprechend den Erfordernissen bezüglich Festigkeit, Dynamik und anderen Parametern gewählt werden. Es wird bevorzugt, dass die Führungsbereiche 12 der symmetrisch zur Achse Z zueinander angeordneten Getriebe 2 ebenfalls zueinander symmetrisch bezüglich der Achse Z sind, da dadurch Momente und Kräfte, die durch die Antriebseinheit entstehen, gut ausgeglichen werden können.

Die antreibende Welle 4 und die Verstellwelle 17 sind bezüglich der Rotationsachse R1 der antreibenden Welle 4 koaxial angeordnet. Die scheibenartig ausgebildeten Führungsbereiche 12 sind im Bezug auf ihre äußere, ringartige bzw. zylindrische Mantelfläche derart angeordnet, dass sie eine Mittellinie besitzen, die bezüglich der Rotationsachse R1 exzentrisch angeordnet ist.

Die Exzenterbauteile 13 besitzen bezogen auf ihre äußere, ringförmige Mantelfläche 21 eine Mittellinie, die gegenüber der Mittellinie der Führungsbereiche ebenfalls exzentrisch angeordnet ist. Wenn die Exzentrizität der Mittellinie der Exzenterbauteile 13 gegenüber der Rotationsachse R1 doppelt so groß wie die Exzentrizität der Mittellinie der Führungsbereiche 12 gegenüber dieser Rotationsachse R1 ist, wird ein maximaler Hub erzeugt, den eine Exzentereinheit 9 auf die darauf gelagerten Verbindungselemente 8 übertragen kann. Dieser Hub entspricht dem Doppelten der Summe der Exzentrizitäten.

Durch Verdrehung der Welle 17 gegenüber der Welle 4 wird über die ineinander greifenden Verzahnungen 15, 18 des Exzenterbauteil 13 eine Exzentereinheit 9 um den entsprechenden Führungsbereich 12 verdreht bzw. verschwenkt. Durch diese Verdrehung der Welle 17 wandert die Achse eines Exzenterbauteils 12 entlang eines Kreises, was zu einer Veränderung des Abstands zwischen dieser Achse und der Rotationsaches R1 führt. Damit wird die Exzentrizität der Exzenterbauteile gegenüber der Rotationsachse R1 verändert (verringert bzw. vergrößert, abhängig von der aktuellen Position der Drehrichtung), was entsprechend den auf die Verbindungselemente 8 übertragbaren Hub beeinflusst.

Zur Verdrehung der kurbelwellenähnlich ausgebildeten Getriebeeingangswelle 4 gegenüber den Exzenterbauteilen ist ein Verstellmechanismus 26 vorgesehen, der konzentrisch zur Rotationsachse R1 ist und die Verstellwelle um die Rotationsachse R1 drehen kann.

Der Verstellmechanismus 26 weist in der dargestellten Ausführungsform einen Elektromotor als Verstellmotor 27 auf. Die Verbindung zwischen dem Verstellmechanismus 26 und der antreibenden Welle erfolgt über bekannte Kupplungsmittel, z.B. Zahnräder, wobei nach Bedarf eine Übersetzungseinrichtung, wie z.B. ein Planetengetriebe, zwischengeschaltet werden kann. Aus Figur 1 ist zu erkennen, dass jedes der Getriebe 2 einen vom jeweils anderen Getriebe unabhängigen Verstellmechanismus 26 aufweist, so dass die Einstellung und Justierung unabhängig von der jeweils anderen antreibenden Welle 4 vorgenommen werden kann. Dadurch kann an jedem angetriebenen Rad das jeweils dort erforderliche Moment bereitgestellt werden. Der Verstellmotor 27 sowie das konzentrisch um den Verstellmotor 27 angeordnete Planetengetriebe 28, das als Zwischengetriebe zur Erreichung des erforderlichen Verstellmoments dient, sind seitlich außerhalb und koaxial zu den antreibenden Wellen 4 angeordnet.

Ein anderer Verstellmechanismus 26 für das Einstellen der Verstellwelle ist ebenfalls möglich.

Bei der Antriebsanordnung 1 ist ferner eine elektrische Maschine 32 vorgesehen, die als Generator und/oder Motor ausgelegt sein kann. Dabei benutzt die elektrische Maschine 32 für beide Getriebe 2 einen gemeinsamen Stator 33, während ein jeweils einem Getriebe 2 zugeordneter Rotor 36 vorgesehen ist. Die elektrische Maschine 32 ist mit der getriebenen Welle 5 über jeweils ein Planetengetriebe 37 verbunden, welches die erforderliche Übersetzung ins Schnelle liefert. Die elektrische Maschine 32 ist ebenfalls in dem Gehäuse 3 der Antriebseinheit 1 aufgenommen, wobei sie jedoch jeweils mittels einer Zwischenwand 35 von den den Exzenterantrieb 6 umfassenden mechanischen Getrieben 2 getrennt ist. Das Gehäuse 3 der Antriebsanordnung 1 in axialer Richtung der antreibenden Welle 4 bzw. der getriebenen Welle 5 ist getrennt (Schnittebene 38) und mehrteilig gestaltet, so dass eine einfache Montage der Antriebseinheit möglich wird.

Der Bereich der elektrischen Maschine 32 ist als Trockenraum ausgeführt. Dazu wird zusätzlich um den Stator 33 der elektrischen Maschine 32 ein Blech 39 gewickelt, welches gleichzeitig zur Befestigung der elektrischen Maschine im Gehäuse dient. Außerdem werden Dichtmittel im Bereich zwischen dem Hohlrad des Planetengetriebes 37 und dem Rotor 36 der elektrischen Maschine 32 vorgesehen, wodurch gewährleistet wird, dass das Planetengetriebe 37 durch das Schmiermittel für das den Exzenterantrieb 6 umfassende mechanische Getriebe mitgeschmiert wird. Gesonderte Schmiermittel sind nicht erforderlich. Die elektrische Maschine 32 kann auf unterschiedliche Weisen mit dem Motor des Kraftfahrzeugs und/oder der getriebenen Welle 5 verbunden werden, und als Generator und/oder Motor betrieben werden. Dazu sind entsprechende Kupplungsmittel vorgesehen.

Verschiedene Anwendungen einer solchen elektrischen Maschine 32 sind in der DE 102 43 533 A1 beschrieben. Die elektrische Maschine 32 ermöglicht es, ein Kraftfahrzeug mittels ihr anzutreiben oder zu verzögern und/oder eine Verzögerung bzw. einen Antrieb des Fahrzeugs mittels der Brennkraftmaschine des Fahrzeugs vorzusehen.

Die getriebene Welle 5, die ebenfalls verdrehbar im Gehäuse 3 gelagert ist, besitzt an ihrer Außenumfangsfläche ein Polygonprofil 50 (Figur 2), das beispielsweise septagonal ausgebildet ist. Die einzelnen Flächen des Polygonprofils können zusätzlich ihrerseits aus zwei Einzelflächen 51, 52 zusammengesetzt sein, wie es später beschrieben wird.

Die einzelnen Freilaufeinheiten 10 besitzen Klemmkörper 42, die hier durch Rollen gebildet sind. Die Klemmwirkung wird somit als "Rollenfreilauf" durch eine profilierte Innenlaufbahn (Polygonprofil 50) in Verbindung mit Rollen als Klemmkörpern 42 erzielt. Alternativ kann ein Klemmkörperfreilauf vorgesehen werden, der eine glatte Innen- und Außenlaufbahn besitzt, jedoch profilierte Klemmkörper aufweist.

Die Klemmkörper 42 sind zwischen dem Innenring 43, der durch das Polygonprofil 50 der Welle 5 gebildet wird, und einem Außenring 44 angeordnet. Die Innenfläche des Außenrings 44 und die Außenfläche des Innenrings 43 sind derart aufeinander abgestimmt, dass die Klemmkörper 42 zumindest in einer Relativdrehrichtung zwischen Innenring 43 und Außenring 44 diese Verdrehung blockieren können, so dass beide Ringe 43, 44 gemeinsam verdreht werden. Entweder wird in die andere Relativdrehrichtung zwischen den beiden Ringen 43, 44 keine Sperrwirkung durch die Klemmkörper 42 erzeugt, oder aber es werden so genannte umschaltbare Freiläufe vorgesehen, welche neben einer Neutralstellung, in der sie eine Relativdrehung des Innenrings 43 und des Außenrings 44 erlauben, zwei Blockierpositionen aufweisen, in denen die beiden Ringe 43, 44 in eine erste bzw. zweite Relativdrehrichtung blockieren und somit in eine erste und zweite Drehrichtung gemeinsam verdreht werden. Wenn solche umschaltbaren Freilaufeinrichtungen vorgesehen werden, kann im Getriebe 2 die Drehrichtung der Welle 5 verändert werden und beispielsweise ein Rückwärtsgang realisiert werden.

Am Außenring 44 einer Freilaufeinheit 10 ist ein Anlenkbereich 47 vorgesehen, der z.B. durch einen vorstehenden Nocken des Außenrings 44 gebildet wird. Das Ende 48 eines Verbindungselements 8 ist gegenüber dem Anlenkbereich 47 um die Achse 47a verschwenkbar bzw. verdrehbar mit seinem Pleuelauge 49 gelagert.

Von der Brennkraftmaschine des Fahrzeugs (nicht dargestellt in Fig. 1 ind 2) wird ein Drehmoment in die kurbelwellenähnlich gestalteten antreibenden Wellen 4 über eine Kegelrad- oder Hybridstufe 65 eingeleitet. Dazu ist ein Kegelrad 66, das mit dem Antriebsdrehmoment der Brennkraftmaschine beaufschlagt wird, verdrehbar im Gehäuse 3 im mittleren Bereich zwischen den antreibenden Wellen 4 der Getriebe 2 gelagert. Seine Drehachse fällt im Wesentlichen mit der Symmetrieachse Z der Antriebsanordnung 1 zusammen. Vom Kegelrad 66 wird das Antriebsdrehmoment in eine der antreibenden Wellen 4 eines Getriebes, in Figur 1 das Getriebe 2 der linken Hälfte der Figur, eingeleitet. Zwischen den antreibenden Wellen 4 besteht eine direkte Verbindung durch eine Nabe 67 mit einer Zwischenverzahnung. Somit drehen die Antriebswellen 4 der Getriebe 2 in die gleiche Drehrichtung.

Durch die separate Einstellmöglichkeit der Übersetzung des linken bzw. rechten (Figur 1) Getriebestrangs kann die Antriebsanordnung 1 die Funktion eines Differentials mit freier Lastverteilung zwischen den beiden durch die Antriebsanordnung 1 angetriebenen Rädern übernehmen. Besonders vorteilhaft ist die in Figuren 1 und 2 dargestellte Ausführungsform für einen Hinterachsantrieb.

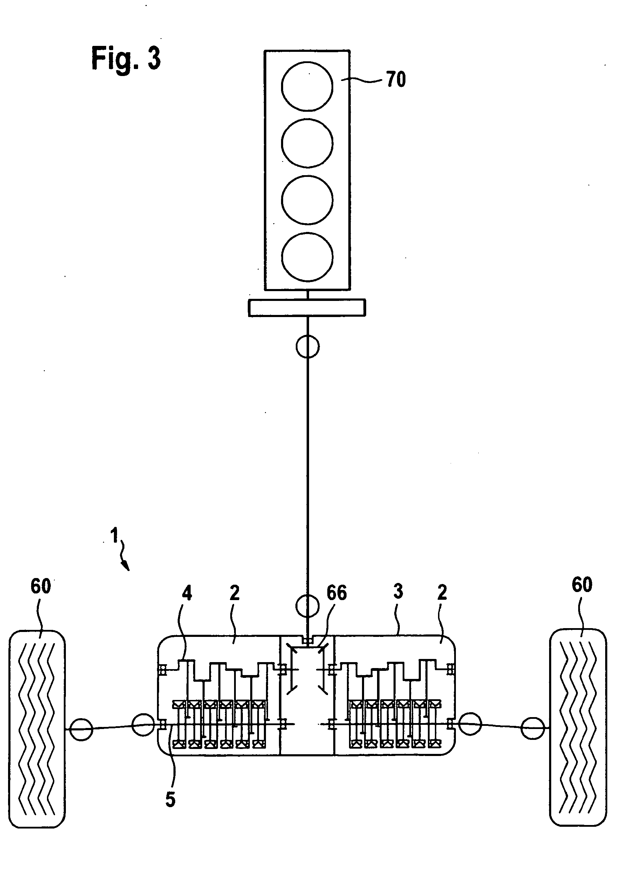

Schematisch ist ein entsprechender Hinterradantrieb, der für jedes der angetriebenen Räder 60 ein Kurbelgetriebe 2 vorsieht, in Figur 3 dargestellt. Die Getriebe 2 sind in einem gemeinsamen Gehäuse 3 untergebracht. Allerdings wird anders als bei der in Verbindung mit Figuren 1 und 2 beschriebenen Ausführungsform das Motormoment einer Brennkraftmaschine 70 an jede der kurbelwellenartig ausgebildeten antreibenden Wellen 4 der Getriebe 2 mittels des Kegelrads 66 verteilt, indem beide antreibenden Wellen 4 jeweils mit dem Kegelrad 66 kämmen, so dass die antreibenden Wellen 4 der Getriebe 2 entgegen gesetzte Drehrichtungen aufweisen. Die Freiläufe der Freilaufeinheiten 10 sind derart eingebaut, dass die Ausgangswellen 5 wiederum gleichsinnige Drehrichtungen aufweisen.

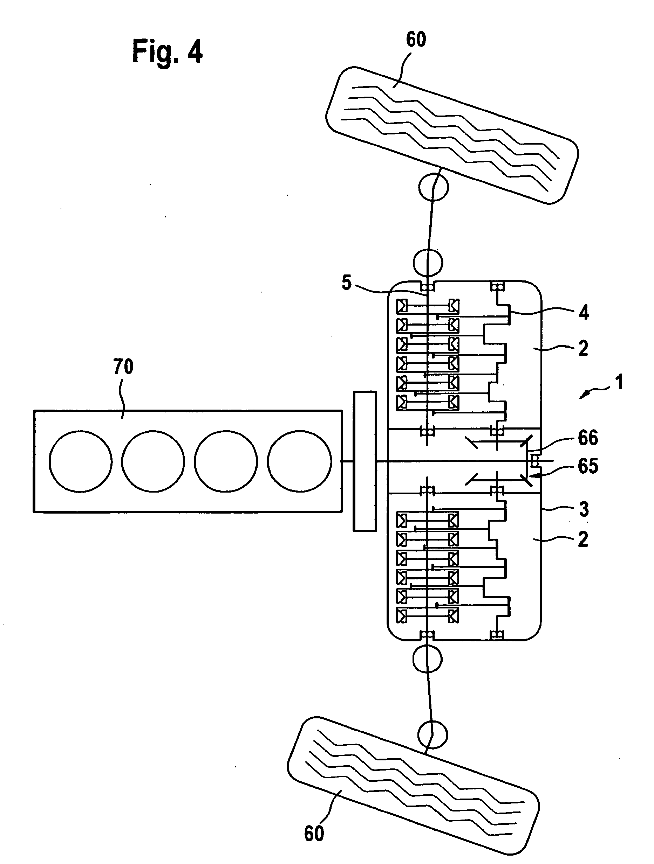

Das Konzept, unter Vermeidung eines Differentials allen angetriebenen Räder 60 eines Kraftfahrzeugs jeweils ein, für das spezielle angetriebene Rad vorgesehenes Kurbelgetriebe 2 zuzuordnen, kann auf andere Antriebsanordnungen übertragen werden. In Figur 4 ist beispielsweise eine Anordnung für einen Frontantrieb schematisch dargestellt. Für jedes der angetriebenen Räder 60 ist eine eigene Getriebeeinheit 2 mit einer unabhängigen Verstelleinrichtung, wie sie in Verbindung mit Figuren 1 und 2 beispielsweise als von einem Verstellmotor 27 angetriebene Verstellwelle 17 beschrieben wurde, vorgesehen. Die Getriebeeinheiten 2 sind in ein gemeinsames Gehäuse 3 integriert. Somit kann für jedes Rad das gewünschte Antriebsmoment eingestellt werden, indem mittels der Verstelleinrichtung die Übersetzung des Getriebes 2 beeinflusst wird. Die Funktion von einer Differentialsperre und/oder Fahrstabilisierung kann damit durch entsprechende Steuerung übernommen werden.

In Figur 4 ist gezeigt, dass die Drehachsen der Getriebeeinheiten 2, d.h. die antreibende Achse 4 und die getriebene Achse 5 jeweils im Wesentlichen parallel zur Achse der angetriebenen Räder 60 bei Geradeausfahrt des Fahrzeugs sind. Der Motor, d.h. die Brennkraftmaschine 70, des Fahrzeugs ist längs im Fahrzeug eingebaut. Ähnlich wie bei der in Figur 1 gezeigten Ausführungsform wird das Motormoment zunächst mit einem Kegeltrieb 65 auf die beiden Getriebe 2 aufgeteilt, insbesondere deren antreibende Wellen 4. Allerdings kämmt, anders als bei der in Figur 1 gezeigten Ausführungsform, jede der antreibenden Wellen 4 unmittelbar mit dem Kegelrad 66 des Kegeltriebs 65, so dass die kurbelwellenartig ausgebildeten antreibenden Wellen 4 der Getriebe 2 entgegengesetzt drehen. Daher sind die Freilaufeinheiten 10 der Freilaufeinrichtung 7 derart eingebaut, dass sie zueinander entgegen gesetzte Drehrichtungen als Blockierrichtung aufweisen, so dass durch ihre Einbaulage eine gleichsinnige Drehung der getriebenen Wellen 5 bewirkt wird. Statt der in Figur 4 dargestellten Ausführungsform, bei der das Moment der Brennkraftmaschine 70 über einen gemeinsamen Kegeltrieb 65 in jede der antreibenden Wellen 4 eingeleitet wird, kann auch eine Anordnung mit zwei Kegeltrieben vorgesehen werden, bei der die Antriebswellen 4 gleichsinnig drehen.

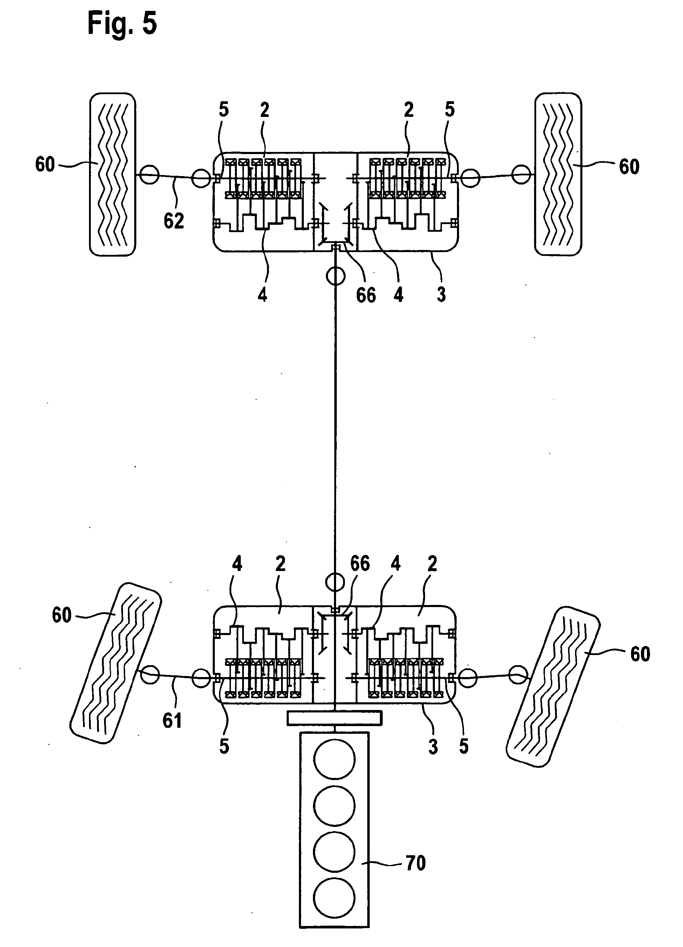

Eine Variante für Allradantrieb ist in Figur 5 dargestellt. Dabei sind vier Getriebeeinheiten 2 vorgesehen, wobei jeweils zwei Getriebeeinheiten in ein gemeinsames Gehäuse 3 zusammengefasst sind, nämlich die zwei der Vorderachse des Fahrzeugs zugeordneten Getriebeeinheiten in ein erstes Gehäuse 3 und die zwei der Hinterachse des Fahrzeugs zugeordneten Getriebeeinheiten in ein zweites Gehäuse 3. Das Antriebsmoment der Brennkraftmaschine 70 wird jeweils mittels eines Kegelrads 66 auf die zwei zueinander im Wesentlichen koaxial ausgerichteten antreibenden Wellen 4 von zwei in einem gemeinsamen Gehäuse 3 untergebrachten Getrieben 2 übertragen. Dies bedeutet, dass die antreibenden, kurbelartigen Wellen aller vier Kegelradgetriebeeinheiten 2 im Wesentlichen die gleiche Drehzahl haben. Die getriebenen Wellen 5 mit den Freiläufen 10 befinden sich in Fahrtrichtung an der Vorderachse 61 des Kraftfahrzeugs vor den antreibenden Wellen 4. An der Hinterachse 62 ist in der dargestellten Ausführungsform die getriebene Welle 5 des Getriebes 2 hinter der antreibenden Welle 4 angeordnet, wobei deren Lage jedoch im Wesentlichen beliebig ist.

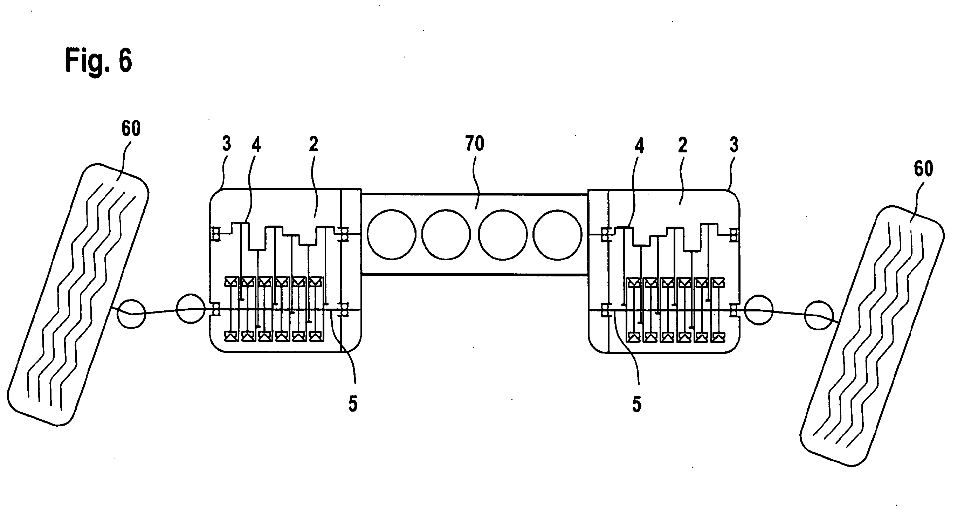

Figur 6 zeigt eine Frontantriebsanordnung, bei welcher der Motor 70 (Brennkraftmaschine) des Fahrzeugs im Fahrzeug anders als bei den in Fig. 3 bis 5 gezeigten Ausführungsformen quer eingebaut ist. In diesem Fall können die antreibenden Wellen 4 direkt an der Ausgangswelle des Motors 70 und angrenzend an den Motor angeordnet werden, so dass kein Kegeltrieb oder ähnliches zur Einleitung des Moments der Brennkraftmaschine 70 in das jedem angetriebenen Rad 60 zugeordnete Getriebe 2 erforderlich ist. Die antreibenden Achsen 4 der Getriebe 2, die in getrennten Gehäusen beidseitig des Motors 70 vorgesehen sind, weisen gleiche Drehrichtungen auf.

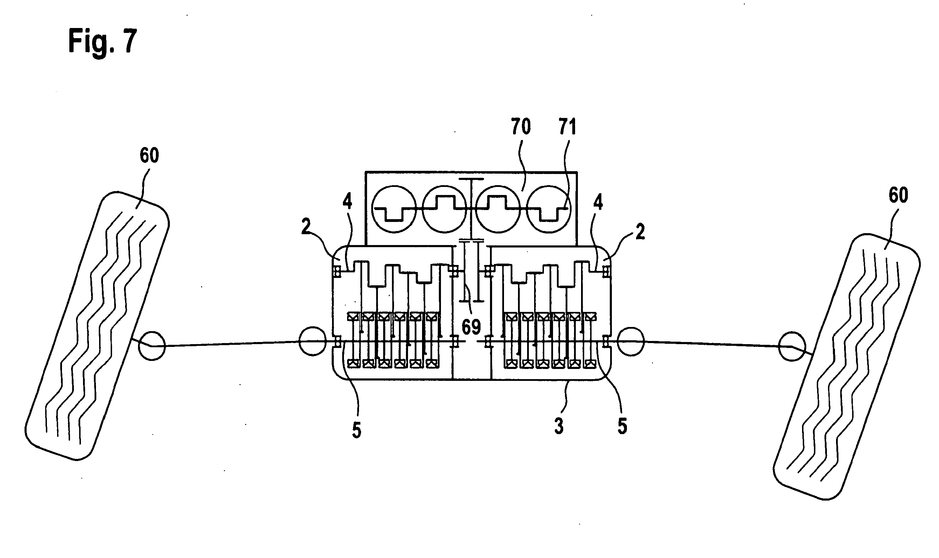

Eine alternative Ausgestaltung bei ebenfalls quer im Fahrzeug eingebautem Motor 70 ist in Figur 7 dargestellt. Dabei sind die jedem Rad 60 zugeordneten Getriebe 2 wiederum in einem gemeinsamen Gehäuse 3 untergebracht, an das sich der Motor 70 in Fahrzeugslängsrichtung anschließt. Das Moment der Brennkraftmaschine 70 wird in der Mitte der Brennkraftmaschine abgegriffen, d.h. in der Mitte der Kurbelwelle 71. Damit sind längere Gelenkwellen zu den Rädern 60 möglich. Das in der Mitte abgegriffene Motormoment wird über beispielsweise einen Zahnrad-, Zahnriemen- oder Kettentrieb 69 in die antreibenden Wellen 4 der Getriebe 2 eingeleitet. Die Getriebe 2 sind in einem gemeinsamen Gehäuse 3 untergebracht.

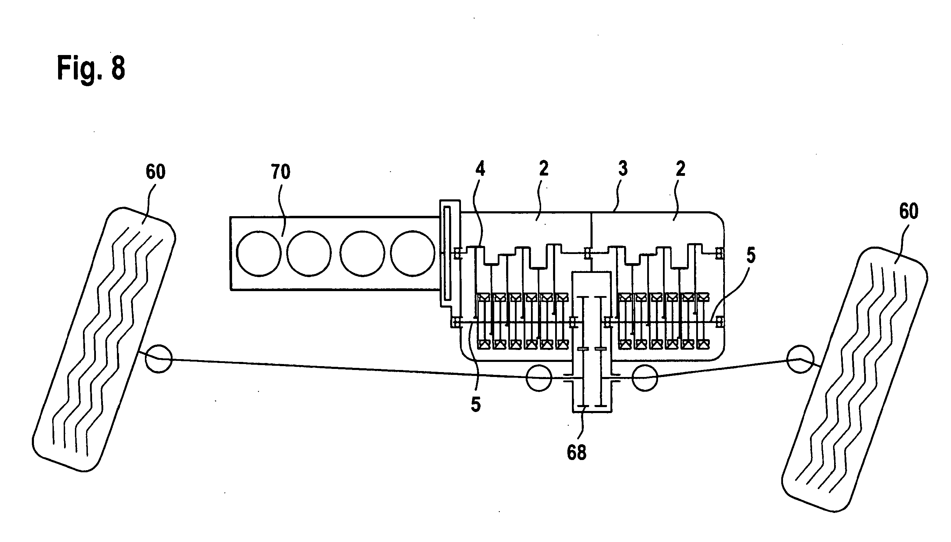

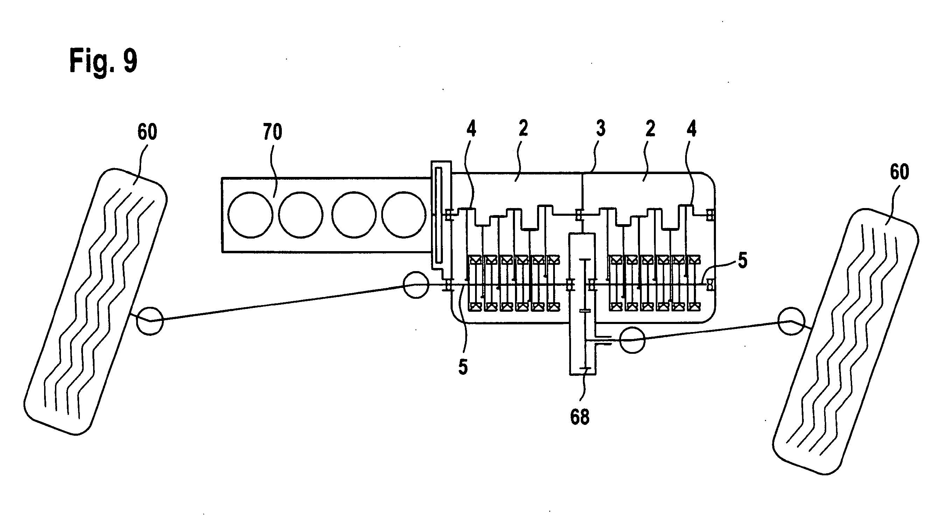

Bei den in Figuren 8 und 9 dargestellten Antriebseinheiten für ein Kraftfahrzeug mit zwei angetriebenen Rädern ist die Brennkraftmaschine 70 quer zur Fahrtrichtung und asymmetrisch im Bezug auf eine Fahrzeugslängsebene angeordnet. Ebenso sind die jedem angetriebenen Rad zugeordneten Getriebe 2 asymmetrisch bezüglich der Fahrzeuglängsebene, seitlich angrenzend an die Brennkraftmaschine 70 vorgesehen. Sie sind nebeneinander liegend und in einem gemeinsamen Gehäuse 3 untergebracht. Das Moment der Brennkraftmaschine 70 wird an einem seitlichen Ende der (in Figur 8 und 9 nicht dargestellten) Kurbelwelle der Brennkraftmaschine 70 abgegriffen und in die, beispielsweise ähnlich wie in Figur 1 dargestellt verbundenen, antreibenden Wellen 4 der Getriebe 2, eingeleitet. Bei der in Figur 8 dargestellten Ausführungsform wird das Moment an der angetriebenen Welle 5 der Getriebe 2 mittels eines Stirntriebs 68 abgegriffen, wobei der Stirntrieb 68 mittig zwischen den zwei Getriebeeinheiten 2 angeordnet ist, was eine verhältnismäßig lange Gelenkwelle zu dem jeweils angetriebenen Rad 60 ermöglicht. In Figur 9 ist eine kombinierte Ausführungsform dargestellt, wobei auf der einen Seite, d.h. zum ersten Rad, das Moment an der angetriebenen Welle 5 unmittelbar an die Gelenkwelle und damit das angetriebene Rad weitergegeben wird, während auf der anderen Seite das Moment mittels eines Stirntriebs mittig abgegriffen und übertragen wird. Auf der ersten Seite wird das Moment seitlich auf derjenigen Seite, auf der die Brennkraftmaschine 70 angrenzend an das Gehäuse 3 der Getriebe 2 angeordnet ist, abgegriffen.

Bei den in Figuren 3 bis 9 dargestellten Ausführungsformen mit jeweils einer Getriebeeinheit 2 für ein angetriebenes Rad wird vorzugsweise eine elektrische Maschine 32, wie sie in Figur 1 dargestellt ist, als Schubmomenteinrichtung nur an einer Radachse oder nur für ein angetriebenes Rad vorgesehen, was zum Erzielen der Antriebs- oder Bremswirkung ausreicht. Die Bauteile und der Aufbau aller Getriebe 2 ist vorzugsweise gleich, so dass verhältnismäßig wenig verschiedene Bauteile benötigt werden und eine kostengünstige Herstellung und problemlose Wartung möglich ist.

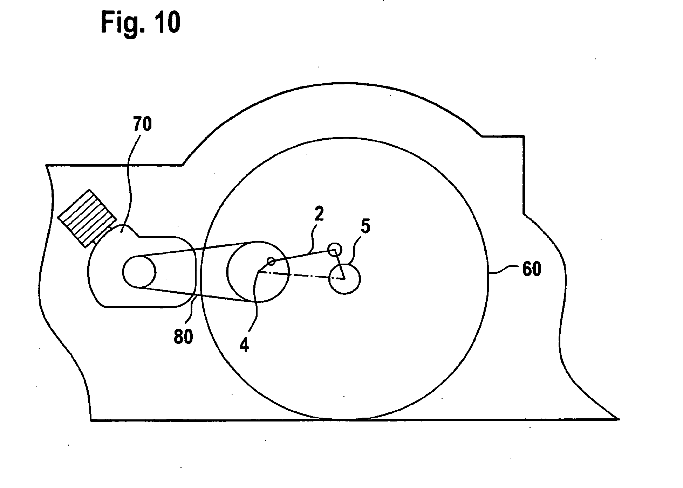

Eine Anwendung für ein Zweirad ist schematisch in Figur 10 gezeigt. Das Hinterrad 60, beispielsweise eines Rollers, besitzt eine angetriebene Achse, die durch die getriebene Welle 5 eines Kurbelgetriebes 2 gebildet wird. In die antreibende Achse 4 wird das Drehmoment von einem Verbrennungsmotor 70 mittels eines Zahnriementriebs 80 eingeleitet. Der Riementrieb 80 dient dazu, den Abstand zwischen Motor und Hinterachse zu überbrücken. Gleichzeitig kann durch den Riementrieb 80 eine Abstimmung zwischen Motor und Kurbelgetriebe im Hinblick auf die Akustik erreicht werden, wozu vorzugsweise eine Übersetzung von i = 2,0 ins Langsame durch den Riementrieb 80 eingestellt wird. Durch die Übersetzung ins Langsame werden die Schalttrequenzen des Freilaufs minimiert und damit die Geräusche eingedämmt. Vorzugsweise wird ein Zahnriemen mit fester Zuordnung von Motor- zu Antriebswellenwinkel verwendet.

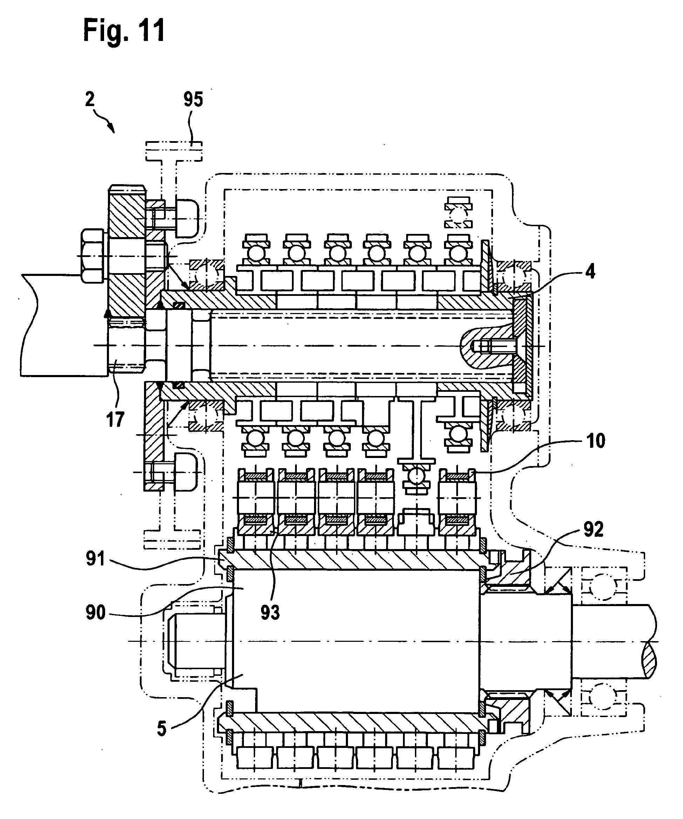

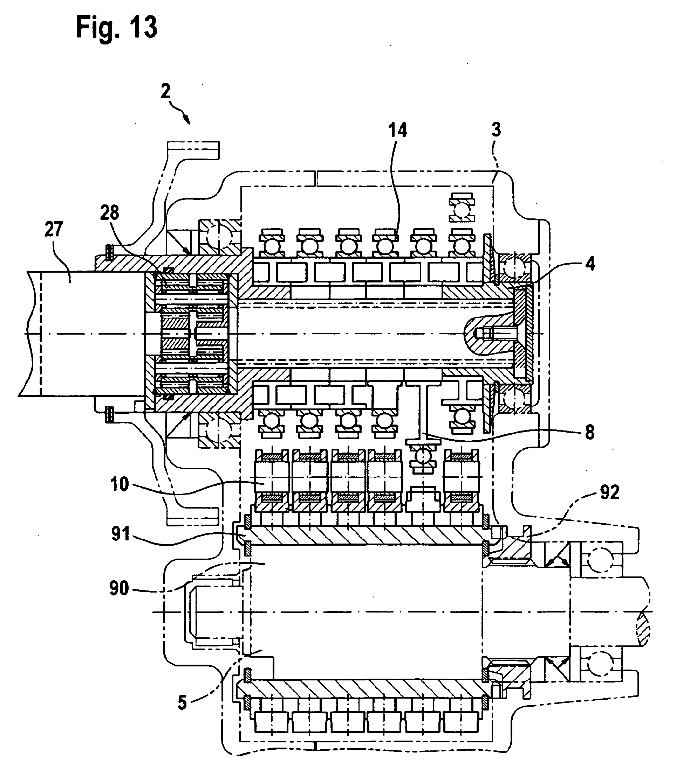

Um eine Konstruktion zu erzielen, bei der die getriebene Welle 5 gleichzeitig die Achse des angetriebenen Hinterrads 60 eines Zweirads ist, wird die getriebene Welle 5 vorzugsweise zweiteilig ausgeführt, d.h. sie besitzt einen inneren Teil 90 (Innenwelle) und ein sich auf dem inneren Teil abstützendes äußeres Rohr 91 (Fig. 11, 13). Das äußere Rohr trägt die Freiläufe 10 mit ihren Lagerungen. Das äußere Rohr 91 ist auf dem inneren Teil 90 der getriebenen Welle 5 mittels einer Spielpassung gelagert. Dadurch kann sich das Rohr 91 bezüglich des inneren Teils 90 der angetriebenen Welle relativ drehen. Die innere Welle 90 bildet gleichzeitig die Achse für das Hinterrad 60 des Zweirads. Zur Übertragung des Drehmoments vom Rohr 91 auf den inneren Teil 90 der Welle ist eine axiale Klauenkupplung 92 vorgesehen, welche vorzugsweise zumindest im Stillstand des Rollers bzw. Getriebes 2 geöffnet werden kann. Bei geöffneter Kupplung 92 kann der Roller rückwärts geschoben werden.

Die Freiläufe 10 werden vorzugsweise durch Klemmkörperfreiläufe gebildet, die für hohe Schaltfrequenzen geeignet sind. Außerdem werden vorzugsweise solche Freiläufe verwendet, die in Verbindung mit dem in Figur 11 bzw. 13 dargestellten Kurbelgetriebe 2 rückwärts sperrend wirken. Dieses wird bewusst als Funktion zum Anhalten an Steigungen ausgenutzt.

Die Lagerung des Außenrings 44 der Freiläufe 10 erfolgt über Gleitlager, welche auf den äußeren Ring 91 der getriebenen Welle 5 fest aufgepresst sind. Die Gleitlager sind beispielsweise aus Messing, Kunststoff oder Synthetikwerkstoffen gefertigt. Alternativ ist z.B. ein Stahlgrundkörper mit einer entsprechenden Gleitwerkstoffbeschichtung zu verwenden. Die Laufschicht ist außen. Die Gleitlager besitzen in sich kein axiales Spiel. Das axiale Spiel für den jeweiligen Freilauf wird daher über axiale Anlaufflächen 93 des Außenrings bestimmt, die beispielsweise als Schulter am Gleitlager oder als Absatz im Außenring ausgestaltet werden können. Dadurch wird das Spiel jedes einzelnen Freilaufs 10 genau eingestellt. Das Gesamtspiel der Außenringe wird entsprechend durch das Einstellen des Paketmaßes, d.h. des Maßes der gesamten Außenringe zusammen, festgelegt.

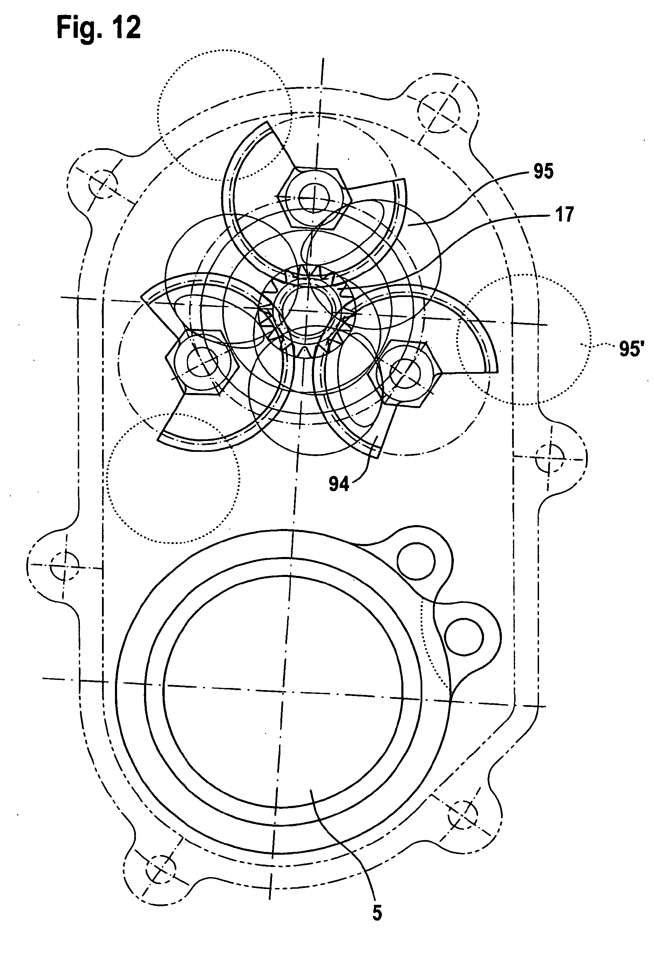

Bei der in Figur 11 dargestellten Ausführungsform ist eine Verstellung der Verstellwelle 17 und damit der antreibenden Welle 4 durch Fliehkraftwirkung dargestellt. Die Verstellwelle 17 kämmt mittels Zahnsegmenten 94 mit Fliehgewichten 95 (Fig. 12), welche an einer Achse gelagert sind und sich bei Drehung nach außen drehen. Diese Drehbewegung wird über jeweils ein Zahnsegment 94 auf die Verstellwelle 17 übertragen und führt dort die erforderliche Verstellbewegung von ca. 270° aus. Bevorzugter Weise werden, wie aus Figur 12 entnehmbar ist, am Umfang der Verstellwelle 17 gleichmäßig in Umfangsrichtung verteilt drei Systeme angeordnet. Eine andere geeignete Zahl an Fliehgewichten 95 und Zahnsegmenten 94 zur gleichmäßigen Einleitung der Verstelldrehbewegung in die Verstellwelle 17 ist jedoch ebenfalls möglich. In Figur 12 ist in Seitenansicht der Fliehkraftverstellmechanismus dargestellt, woraus eine innenliegende Position der Fliehgewichte 95 sowie mit gestrichelten Linien eine nach außen gedrehte Position der Fliehgewichte (Referenznummer 95') hervorgeht.

Der weitere Aufbau des in Figuren 11 und 12 dargestellten Kurbelgetriebes 2 für einen Roller ist im Wesentlichen derselbe wie der eines Kurbelgetriebes 2 gemäß der Ausführungsform von Figuren 1 und 2, so dass eine weitere Erläuterung der Bauteile weggelassen wird. Funktionsgleiche Bauteile sind durchwegs mit gleichen Referenzziffern bezeichnet.

In Figur 13 ist eine alternative Ausführungsform eines Kurbelgetriebes 2 für einen Roller dargestellt. Diese Ausführungsform unterscheidet sich von der vorher in Verbindung mit Fig. 11 und 12 beschriebenen Ausführungsform durch einen elektrischen Verstellmotor 27, der koaxial zur antreibenden Welle 4 angeordnet ist und mit dieser mitdreht. Es erfolgt eine elektrische Dreheinführung, z.B. über einen Schleifkontakt oder über einen induktiven Übertrager. Bevorzugterweise ist der Verstellmotor 27 ein Elektromotor in kurzer Bauweise. Dem Verstellmotor 27 ist ein Übersetzungsgetriebe, das hier als Planetengetriebe 28 ausgestaltet ist, nachgeschaltet. Für ein solches Übersetzungsgetriebe werden kompaktbauende Getriebe mit hohen Übersetzungen, beispielsweise i = 200, bevorzugt eingesetzt, wie z.B. ein Doppelplanetengetriebe in Wolfromanordnung gemäß Figur 13 oder ein Harmonik-Drive-Getriebe.

Außerdem ist die antreibende Welle 4 gegenüber dem Fahrzeug komplett hohl gebohrt. Zusätzlich können die in Figur 2 dargestellten, mit einer Aussparung für die Verstellwelle 17 versehenen Monde der antreibenden Welle 4 in eine Rückstellposition durch beispielsweise eine Tellerfeder vorgespannt werden, was das Rückstellverhalten des Getriebes verbessert.

Im Folgenden werden konstruktive Einzelheiten eines Kurbelgetriebes 2 näher erläutert, welche gleichermaßen auf alle Arten von Kurbelgetriebe angewendet werden können.

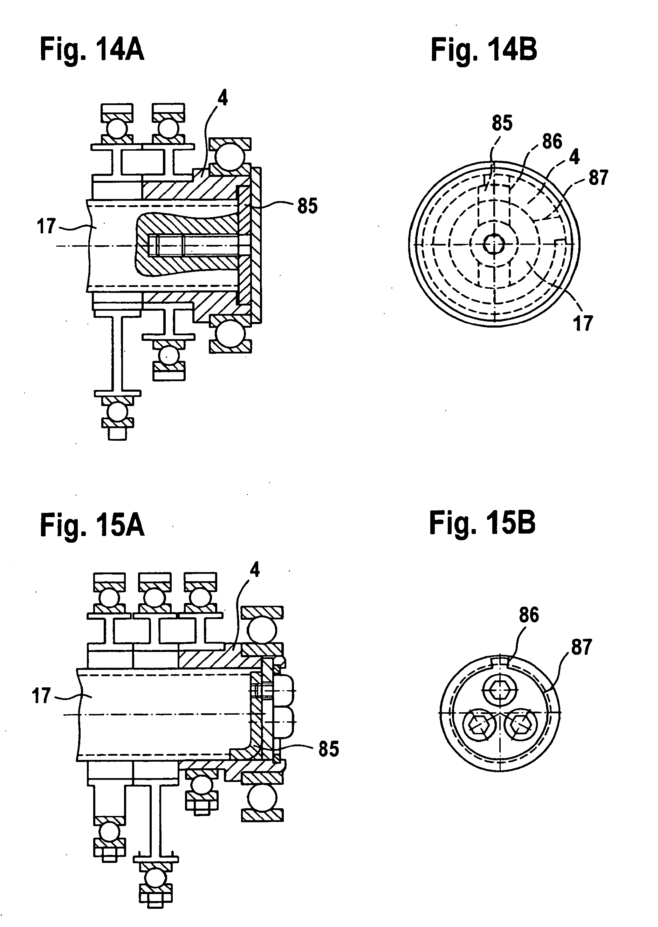

In Figuren 14a und 14b bzw. 15a und 15b ist jeweils in einer seitlichen Schnittdarstellung sowie in Seitenansicht eine Anschlagsanordnung zwischen einer Verstellwelle 17 und einer antreibenden Welle 4 dargestellt. Bei der in Figuren 14a und 14b gezeigten Ausführungsform ist auf der Verstellwelle 17 ein Anschlagselement 85 (Zeiger) in der Gestalt eines Blechs durch eine Schraubenverbindung befestigt, so dass das Anschlagselement 85 mit der Verstellwelle 17 mitdreht. An der antreibenden Welle 4 sind feste Anschläge 86, 87 durch radial nach innen vorspringende Bereiche der Welle 4 gebildet, gegen die das Anschlagselement 85 in Extrempositionen der Verstellwelle 17 gelangt. Durch diese geometrisch vorgegebenen Anschläge werden Schaltpositionen "Geared Neutral" bzw. "Overdrive" geometrisch vorgegeben.

Aus Figuren 15a und 15b geht ein alternatives Konzept für den Anschlag hervor. Die Anschlagspositionen 86, 87 sind wiederum an der antreibenden hohlen Welle 4 durch radial nach innen vorspringende Bereiche gebildet. Das Anschlagselement 85 wird durch ein gebogenes Blechelement geformt, welches gegen die Anschläge 86, 87 stößt, wenn es mit der Verstellwelle 17 mitdreht und die Extrempositionen erreicht.

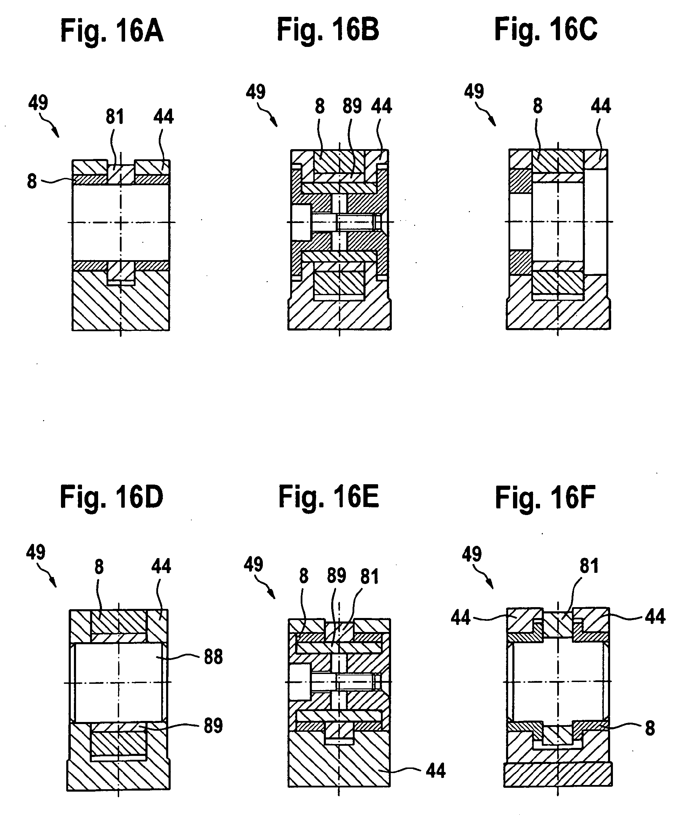

Figuren 16a bis 16f zeigen Querschnittsansichten verschiedener Ausführungsformen des Pleuelauges 49 zur Lagerung des pleuelartigen Verbindungselements 8 am Anlenkbereich 47 des Außenrings 44. Bei den in Figuren 16a bis 16e gezeigten Ausführungsformen ist der Außenring 44 einteilig, während bei der in Figur 16f gezeigten Ausführungsform der Außenring 44 geteilt ist.

Bei der bevorzugten Ausführungsform nach Fig. 16d wird das Verbindungselement 8 mittels eines Bolzens 88 im Anlenkbereich 47 des Außenrings 44 gelagert. Dazu wird zusätzlich ein Gleitlager 89 eingebracht, um gute Gleiteigenschaften (Verdrehung) zwischen dem Außenring 44 und dem Verbindungselement 8 (Pleuelstange) zu gewährleisten.

Bei der in Figur 16a gezeigten Ausführungsform wird das Verbindungselement 8 im Anlenkbereich 47 geteilt und mittig durch einen Sicherungsring 81 bezüglich der Axialrichtung des Pleuelauges 49 in der Lage fixiert. In Figur 16b ist eine Schraubverbindung dargestellt, mit welcher das Gleitlager 89 fixiert werden kann. Figur 16e zeigt eine ähnliche Ausgestaltung wie Figur 16b, wobei im Gegensatz dazu das Pleuelauge 49 geteilt ist. Grundsätzlich sind alle Arten von Verbindungen möglich, solange gute Gleiteigenschaften zwischen Verbindungselement 8 und Lagerfläche gewährleistet sind.

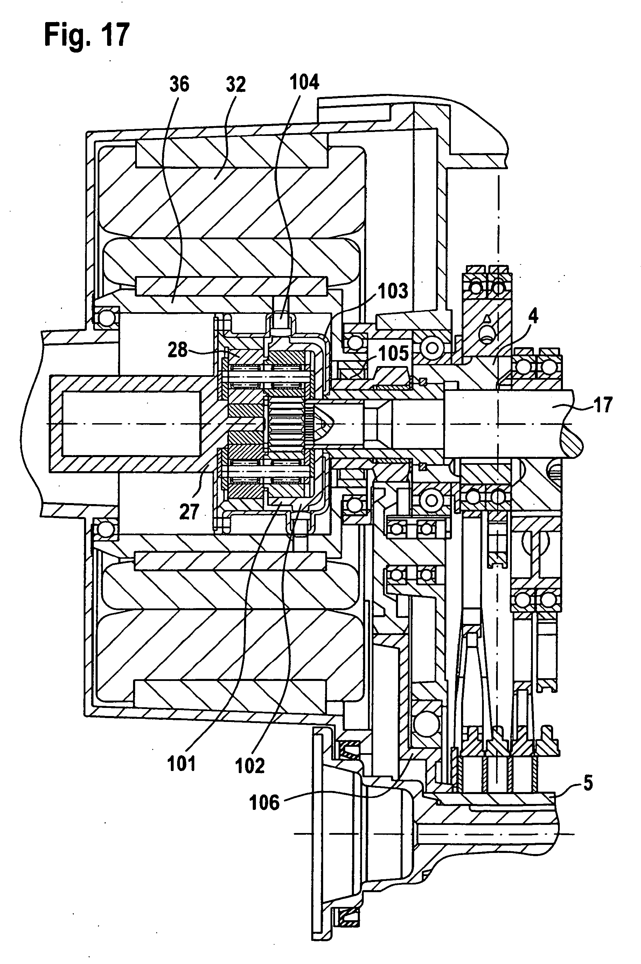

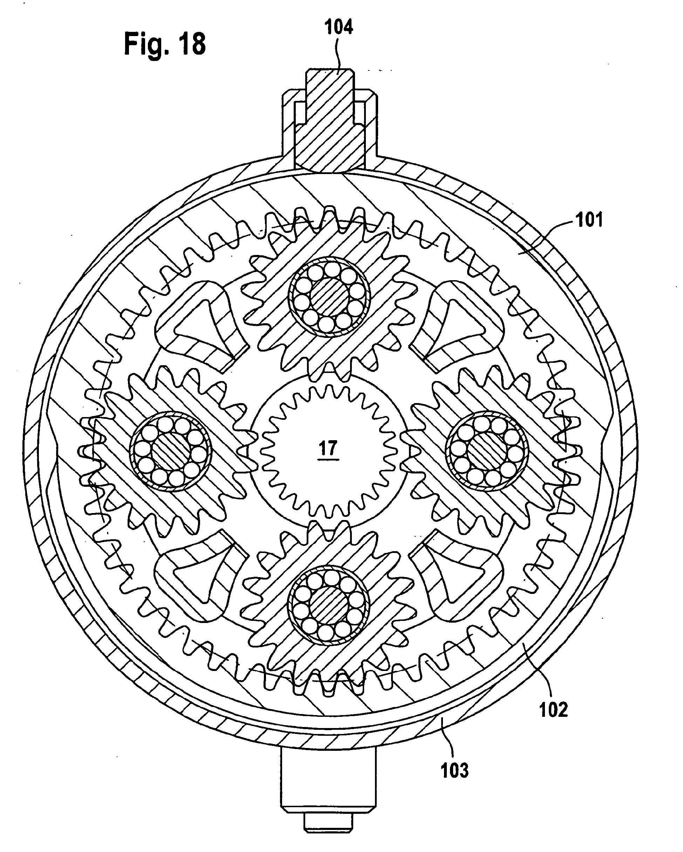

Eine bevorzugte Ausgestaltung zum Schalten einer Kupplung für eine elektrische Maschine in einem Kurbelgetriebe ist in Figuren 17 und 18 dargestellt. Die elektrische Maschine 32 ist wahlweise mit der antreibenden Welle 4 bzw. der getriebenen Welle 5 zu verbinden. Zur Minimierung des Aufwands zur Verbindung der elektrischen Maschine 32 mit der antreibenden Welle 4 bzw. der getriebenen Welle 5 wird, wie es in Figur 17 gezeigt ist, der für die stufenlose Verstellung der Übersetzung im Kurbelgetriebe vorhandene Aktor, d.h. der Aktor zur Betätigung der Verstellwelle 17, auch zur Umschaltung der Verbindung der elektrischen Maschine 32 mit der antreibenden Welle 4 bzw. der getriebenen Welle 5 genutzt. Der Verstellmotor 27 (Elektromotor) zur Verstellung der Verstellwelle 17 steht über ein Planetengetriebe 28 mit der Verstellwelle 17 in Verbindung. Am Abtriebshohlrad 101 des Planetengetriebes 28 ist eine Kurvenscheibe 102 am Außenumfang ausgebildet. Die Kurvenscheibe 102 repräsentiert die Winkelstellung der Verstellwelle 17 des Kurbelgetriebes 2.

Die Kurvenscheibe 102 ist in Wechselwirkung mit einem verschiebbar im Gehäuse 103 des Planetengetriebes 28 gelagerten Bolzen 104. Um den Umfang des Abtriebshohlrades 101 des Planetengetriebes 28 sind mehrere Bolzen 104 vorgesehen. Je nach Position der Kurvenscheibe ist der Bolzen in einer zurückgezogenen Position oder in einer ausgefahrenen Position, in welcher er eine formschlüssige Kupplung zwischen dem Anker (Rotor) 36 der elektrischen Maschine und dem fest mit der antreibenden Welle 4 verbundenen Gehäuse 103 des Planetengetriebes herstellt. Statt eines Bolzens 104 als Schaltelement können andere, eine formschlüssige Kupplung oder eine anderweitige Kupplung herstellende Schaltelemente eingesetzt werden.

Die Schaltstrategie wird vorzugsweise derart gewählt, dass im Bereich der Umschaltung das Kurbelgetriebe 2 immer um einen für die vollständige Schaltung der elektrischen Maschine 32 erforderlichen Betrag verstellt wird, wodurch ein Sprung in der Übersetzung des Kurbelgetriebes 2 erfolgt. Dieser Sprung hängt von der Größe des erforderlichen Schaltwinkels für die formschlüssige Kupplung ab und wird vorzugsweise so klein wie möglich gewählt. Durch Ausgestaltung der Kurvenscheibe kann ferner eine Schalthysterese vorgegeben werden, um ein ständiges Hin- und Herschalten zu vermeiden. Die Kurvenscheiben 102 werden dabei vorzugsweise derart eingestellt, dass der Umschaltzeitpunkt bei einem Gleichlauf der Wellen von Kurbelgetriebe und Zwischengetriebe erfolgt. Die Schalthysterese kann jedoch auch über eine Regelsoftware erzeugt werden, wodurch ebenfalls ein ständiges Hin- und Herschalten vermieden werden kann. Dazu kann der Zuschaltpunkt in einen geringfügig anderen Betriebsbereich als der Abschaltpunkt verlegt werden. So ist es möglich, die Klauenkupplung auch durch die elektrische Maschine 32 zu synchronisieren.

Außerdem können mehrere Kurvenscheiben 102 am Außenumfang des Abtriebshohlrads 101 des Planetengetriebes 28 oder eines entsprechenden Übersetzungsgetriebes für die Verstelleinrichtung vorgesehen werden, so dass mehrere Kupplungen gleichzeitig betätigt werden können, was zu einer Lastreduzierung und symmetrischen Lastverteilung führt. Je nach Schaltstellung des Bolzens 104 wird eine drehfeste Verbindung zwischen dem Rotor 36 der elektrischen Maschine 32 und der angetriebenen Welle 5 über den Freilauf 105 und das Zwischengetriebe 106 erzielt. Andernfalls besteht eine druckfeste Verbindung zwischen der antreibenden Welle 4 und der elektrischen Maschine 32.

Verschiedene Ausführungsformen für umschaltbare Freiläufe, wie sie beispielsweise für die Freilaufeinrichtungen 10 verwendet werden, werden nachfolgend beschrieben.

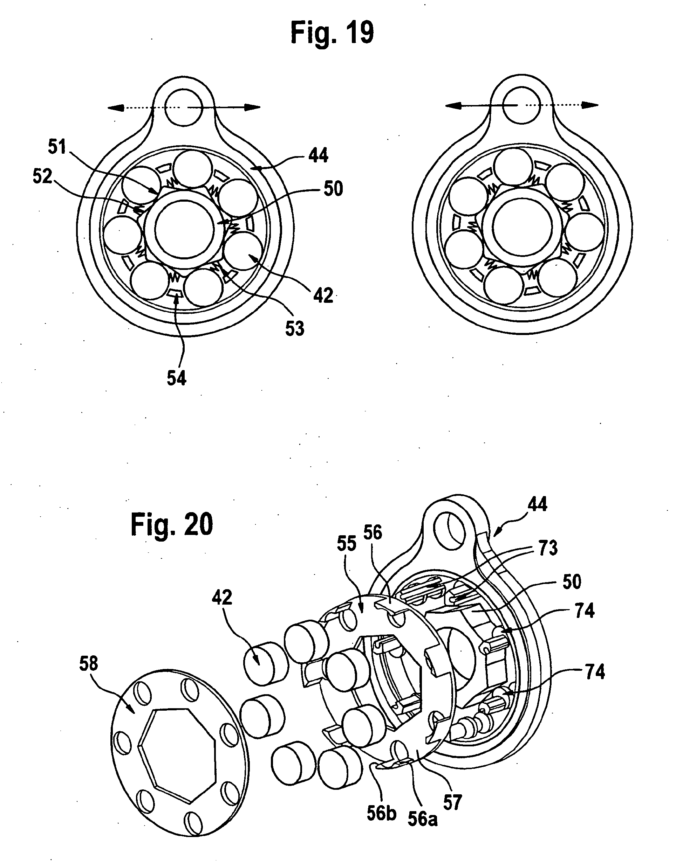

Figur 19 zeigt einen umschaltbaren Freilauf, wobei in der linken Hälfte der Figur die Richtung einer Drehung gegen den Uhrzeigersinn und in der rechten Hälfte die Figur die Drehrichtung im Uhrzeigersinn jeweils die Freilaufrichtung des Freilaufs in der dargestellten Schaltposition sind. Die Freilaufrichtung ist in Figur 19 mittels eines gestrichelten Pfeils angegeben, während die Sperrrichtung durch einen durchgezogenen Pfeil bezeichnet ist. Die Freilaufeinrichtung gemäß Figur 19 enthält einen Außenring 44 sowie einen dazu im Wesentlichen konzentrischen Innenstern 50 (Polygonprofil), der beispielsweise durch eine entsprechende Profilierung der Welle 5 gebildet wird. Der Innenstern 50 ist als Polygonprofil gestaltet, wobei jeweils zwei Anpressflächen (Flanken) 51, 52 ein Paar bilden, mittels dessen die Freilaufrichtung bzw. Sperrrichtung umschaltbar ist. Zwischen dem Außenring 44 und dem durch den Innenstern 50 gebildeten Innenring sind mehrere Rollen 42 als Klemmkörper vorgesehen. In der dargestellten Ausführungsform sind sieben Rollen vorgesehen, wobei jeweils eine linke und eine rechte Flanke 51, 52 einer dazwischen liegenden Rolle 42 zugeordnet sind. Die Rollen 42 werden ferner durch die Feder als Anpresselement 53 in den Spalt zwischen dem Innenstern (rechter Flanke 51) und den Außenring 44 gedrückt; wodurch sichergestellt wird, dass die Rollen 42 als Klemmelemente in Kontakt zu Außenring 44 und Innenstern 50 gehalten werden.

Für den Aufbau des Freilaufs ist ferner ein Käfig 54 für die Rollen vorgesehen. Die Gestaltung des Käfigs ist der Explosionsansicht gemäß Figur 20 zu entnehmen. Ein Gleitlager 55 wird über das Polygonprofil des Innensterns 50 bezüglich des Außenrings 44 zentriert gehalten. Insbesondere ist dazu eine entsprechende polygonförmige Aussparung im Inneren des Gleitlagers 55 vorgesehen, die durch das Polygonprofil des Innensterns 50 formschlüssig verdrehsicher gehalten wird. Das Gleitlager 55 ist als L-Profil gestaltet, wobei mehrere Gleitschuhe 56 in Umfangsrichtung vorgesehen sind, die außen an der Lauffläche des Außenring 44 vorgesehen sind. Sie zentrieren den Außenring 44. Jeder Gleitschuh 56 besitzt ferner zwei gewölbte Flächen 56a, 56b, welche die Freilaufrolle 42 bei einem Lastwechsel (Umschalten von einer Freilaufrichtung in die andere) abfangen. Die Seitenscheibe 57 des Gleitlagers 55 bildet eine Käfigwand für den Käfig 54 für die Rollen 42. Außerdem sind in der Seitenscheibe 57 Aufnahmen bzw. Aussparungen für Umschaltmechanismen vorgesehen. Der Käfig 54 für die Rollen 42 wird durch eine Abschlussscheibe 58 ergänzt. Somit werden die Rollen zwischen der Abschlussscheibe 58, die ebenfalls ein Polygonprofil zu ihrer Zentrierung bezüglich des Innensterns 50 aufweist, und dem Gleitlager 55 gehalten.

Der in Figur 19 und 20 dargestellte Freilauf enthält ferner einen Umschaltmechanismus 72, welcher jeweils einen Profilstab 73 enthält, der in einer Scheibe 74 gelagert ist. Die Scheibe 74 liegt drehbar im Gleitlager 55.

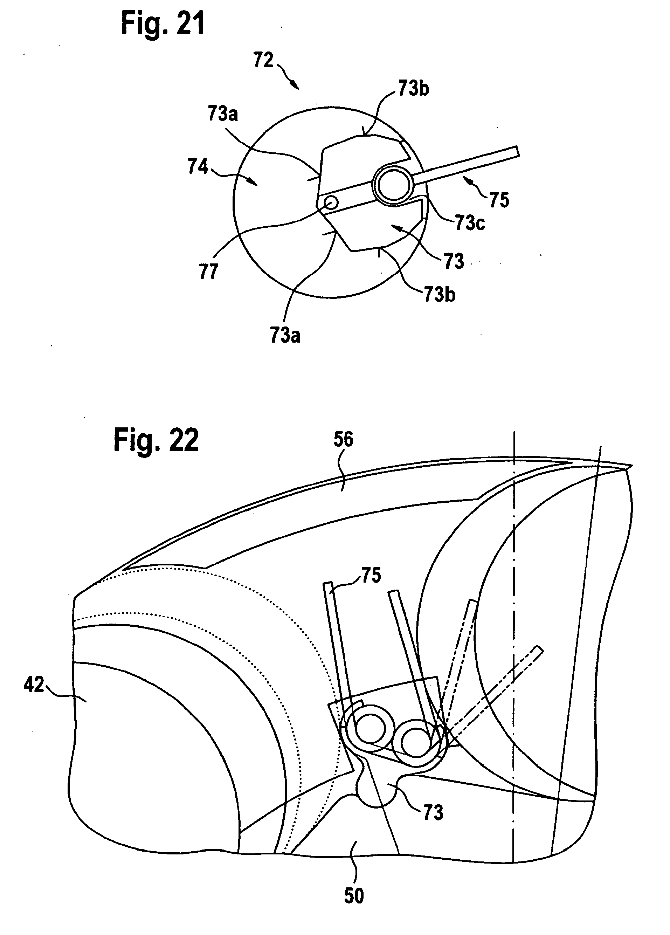

In Figur 21 ist der Umschaltmechanismus 72 im Einzelnen dargestellt. Am profilierten Stab 73, von dem eine Draufsicht in Figur 21 gezeigt ist, ist eine Doppelschenkelfeder 75 in einer Ausnehmung oder Bohrung 73c des Stabs 73 befestigt. Die Umschaltung zwischen linker und rechter Flanke 51, 52 wird dadurch erzielt, dass die Scheibe 74 um ihren Drehpunkt 77 gedreht wird, und somit der profilierte Stab 73 mit der Feder 75 eine Schwenkbewegung ausführt, wodurch die Rolle 42 von der ihr zugeordneten rechten Flanke 51 auf die linke Flanke 52 gedrückt wird. Außerdem kann die Rolle mit dem Umschaltmechanismus in eine Neutralposition gebracht werden, d.h. der profilierte Stab 73 wird geschwenkt, so dass die Feder 75 mit der Rolle 42 nicht mehr in Berührung ist. Je nach anschließender Schwerkraftwirkung bringt sich die Rolle 42 selbst in Eingriff in Abhängigkeit von der Drehrichtung des Innensterns 50 oder des Außenrings 44.

Von den in Figur 21 dargestellten Umschaltmechanismen sind in einer Freilaufeinheit 10 mehrere vorgesehen, wie es Figur 20 entnehmbar ist. Insbesondere liegt zwischen mindestens zwei Rollen 42 jeweils ein Umschaltmechanismus 72. In der dargestellten Ausführungsform ist der Umschaltmechanismus 72 in der Seitenscheibe 57 des Gleitlagers 55 in entsprechenden Ausnehmungen gelagert, wobei jedoch eine Lagerung des Umschaltmechanismus am Innenstern 50 ebenfalls möglich ist.

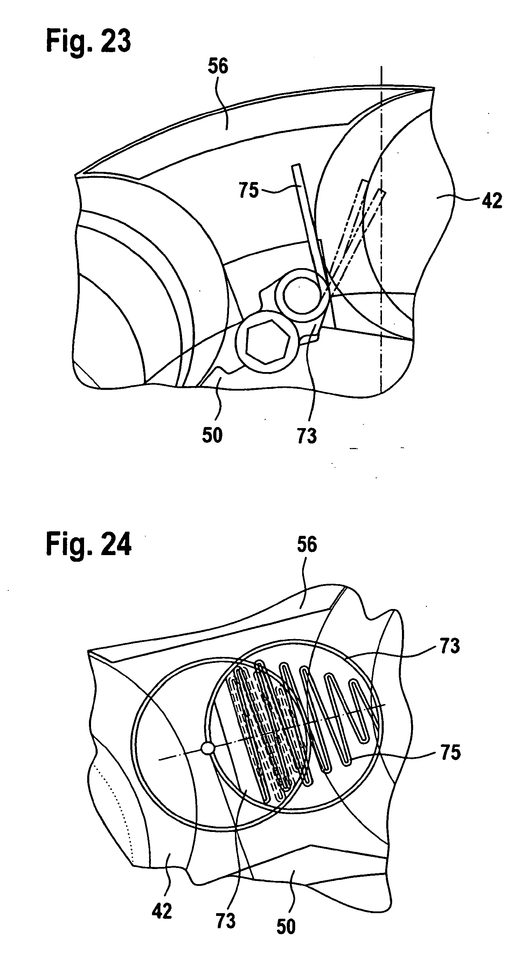

Beispiele für eine Lagerung am Innenstern 50 sind in Figuren 22 und 23 dargestellt, wobei bei der Anordnung gemäß Figur 22 die Feder 75 ebenfalls in ein Halterungselement des Profilstabs 73 eingelegt ist, während bei der Ausführungsform gemäß Figur 23 die Feder um einen Teilkörper des Stabs 73 bzw. eines entsprechenden Befestigungselements gewunden ist. In Figuren 22 und 23 sind jeweils verschiedene Positionen der Feder 75 und der Rollen 42 dargestellt.

Die Außenprofilierung des Stabs 73 ist dabei vorzugsweise derart, dass zwei Flächen 73a jeweils einen Anschlag für eine Rolle 42 bilden. Die mit Referenznummer 73b bezeichneten Flächen bewegen die Rolle 42 unter möglichst geringer Kraftaufwendung von einer Flanke 51 zur anderen 52, wenn die Rollen 42 verklemmt sind, d.h. ein Moment anliegt. Die Befestigung der Stäbe 73 an den Scheiben 74 bzw. bezüglich eines Drehpunkts kann zentrisch oder exzentrisch erfolgen, so dass in jedem Fall eine definierte Schwenkbewegung um einen Drehpunkt 77 möglich ist. Sowohl Scheibe 74 als auch Stab 73 können dabei unterschiedliche Formen aufweisen und jeweils gegebenenfalls aus mehreren Teilen zusammengesetzt sein bzw. die Funktionen der Scheibe und des Stabs in einem einzigen Bauteil vereinigen.

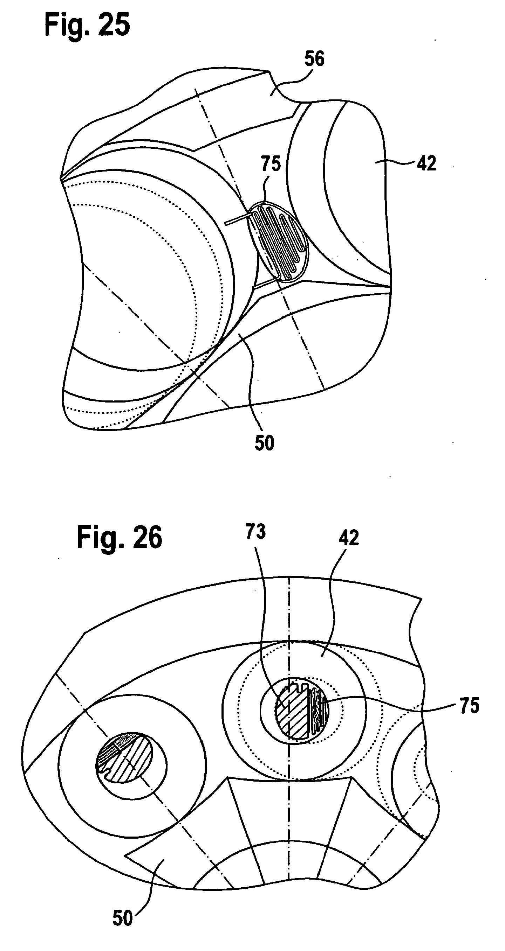

In Figuren 24 und 25 sind weitere Ausführungsformen des Umschaltmechanismus gezeigt, bei dem das Stabelement 73 in der Gestalt eines Flachprofils gebildet ist, das in einer drehbaren Scheibe gelagert ist. Eine Feder 75 ist zusammen mit dem Flachprofil 73 und der drehbaren Scheibe in einem Rohr 76 aufgenommen, das alle drei Elemente umfasst und sicherstellt, dass die Feder 75 während der Anpressung und der Umschaltung in Position gehalten wird.

Die Ausführungsform nach Figur 25 unterscheidet sich dadurch, dass statt eines Rohres 76 zwei U-Profile verwendet werden, wobei die Feder 75 in einem U-Profil gelagert ist, das von einem anderen U-Profil in Position gehalten wird.

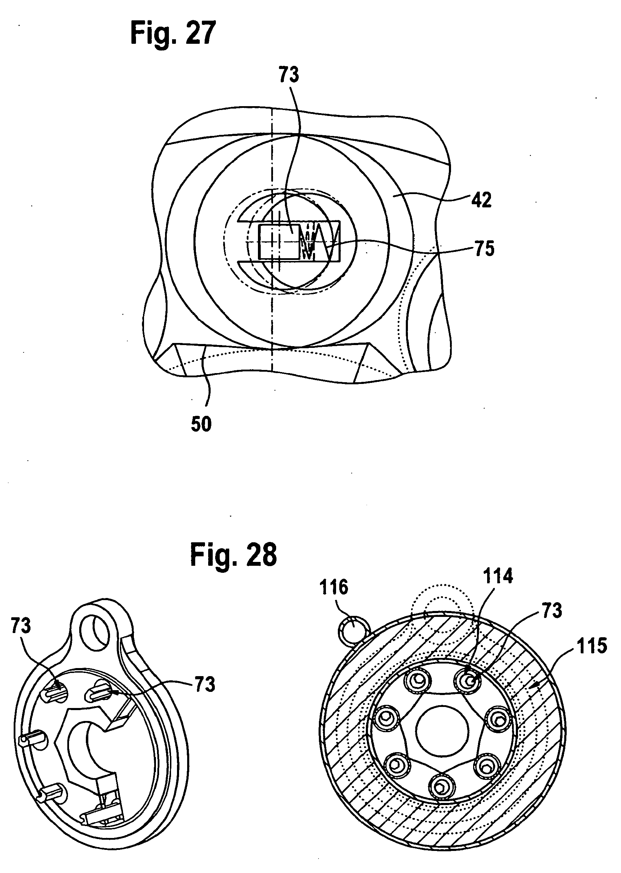

Bei den Ausgestaltungen nach Figuren 26 und 27 ist der Umschaltmechanismus 72 nicht mehr zwischen den einzelnen Rollen 42 angebracht, sondern in einer hohl gebohrten Rolle 42. In der Bohrung befindet sich ein Stab 73, der seitlich im Gleitlager drehbar gelagert ist und auf dem eine Feder 75 drehfest befestigt ist, welche die Anpressung sicherstellt. Durch das Drehen des Stabs 73 bewegt sich die Feder mit und bringt die Rolle in eine neue Anlageposition (Fig. 26). Die Ausführungsform nach Fig. 27 verwendet eine translatorische Verschiebebewegung für die Umschaltung.

Eine Anordnung zum synchronen Umschalten aller Freilaufrollen gleichzeitig ist in Figur 28 dargestellt, wobei in der linken Hälfte der Figur ein abdeckendes Hohlrad 115 weggelassen ist. Der aus mehreren Klemmelementen 42 bestehende Freilauf muss mit allen Klemmelementen gleichzeitig in Anlage mit einer der beiden Flanken 51, 52 des Innensterns gebracht werden, um ein Verspannen des Freilaufs zu verhindern und ein gleichmäßiges Tragen aller Klemmkörper 42 zu ermöglichen. Die freien Enden der Stäbe 73, welche aus dem Freilauf herausragen und drehbar im Gleitlager 55 gelagert sind, sind daher in der in Figur 28 gezeigten Ausführungsform mit Zahnrädern 114 versehen, die gleichzeitig durch ein gemeinsames Hohlrad 115 umfasst werden und mit diesem kämmen. Diese Zahnräder 114 bilden mit dem Hohlrad 115 ein Planetengetriebe, welches durch eine Antriebseinrichtung, beispielsweise einen Elektromotor 116 gedreht wird und es somit ermöglicht, alle Stäbe 73 synchron zu drehen. Wird keine Drehbewegung sondern eine Verschiebebewegung zum Umschalten benötigt, beispielsweise für den in Figur 27 gezeigten Mechanismus, so wird der zugehörige Stab 73 nicht um eine Achse gedreht, sondern er wird in Umfangsrichtung des Freilaufs verschoben, wodurch die Feder 75 eine Vorspannung erfährt, welche die Rolle 42 in die jeweils gewünschte Anlage drückt.

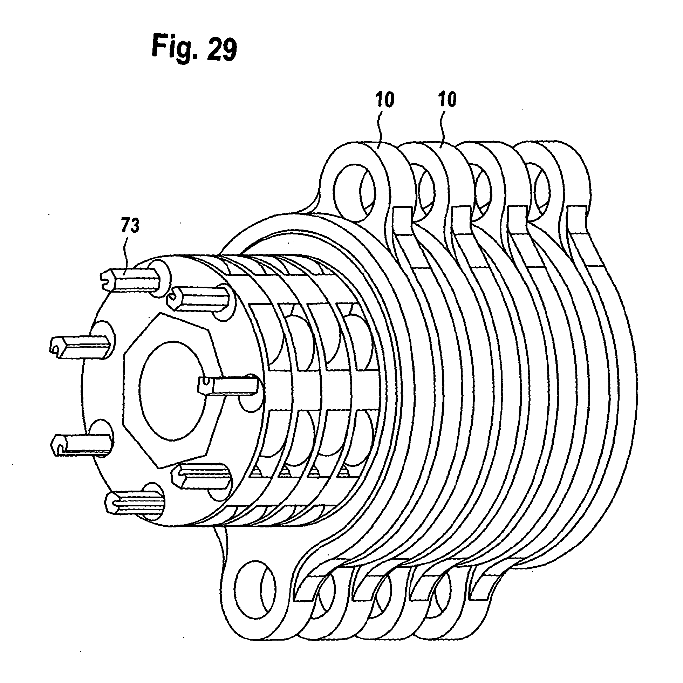

Wenn mehrere Freiläufe 10 hintereinander in Reihe angeordnet sind, wie es in Figur 29 gezeigt ist, so können die Stäbe 73 durch alle Freiläufe hindurchreichen, wodurch alle Freiläufe gleichzeitig geschaltet werden können.

Durch solche umschaltbaren Freiläufe 10 lässt sich bei einer Verwendung in einem Fahrzeug ein Rückwärtsgang durch das Umschalten des Freilaufs erreichen. Wird zudem eine Parksperrenfunktion benötigt, so können die Freiläufe 10 zu deren Ausbildung verwendet werden, wenn in dem Freilauf die Rollen 42 nicht synchron umgeschaltet werden, sondern immer abwechslungsweise die Rolle eines Freilaufs auf die erste Flanke 51 und die Rollen des nächsten Freilaufs auf die andere Flanke 52 gedrückt werden.

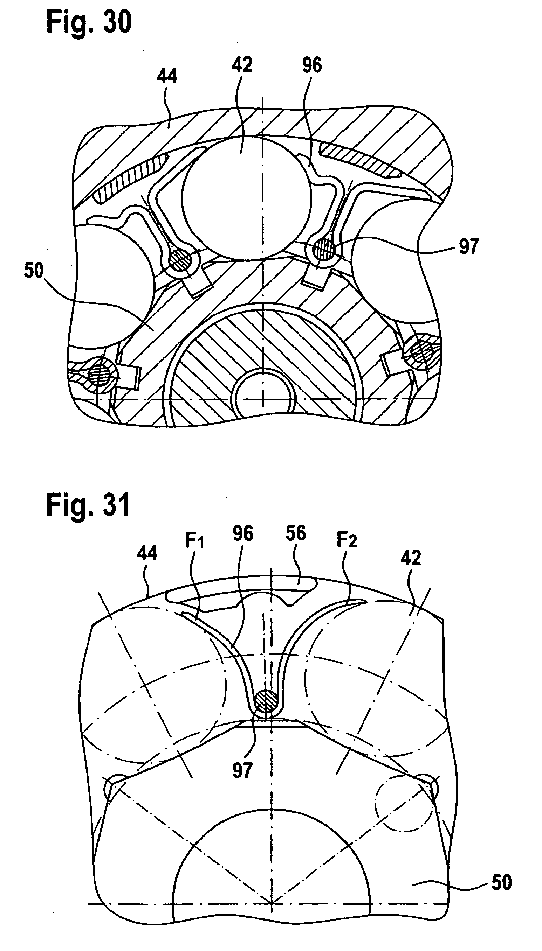

Eine alternative Ausführungsform zur Anpressung und Dämpfung der Rollen an den Innen- bzw. Außenring ist in Figuren 30 und 31 dargestellt. Bei dieser Ausführungsform werden die Rollen 42 mittels einer V-förmigen Blattfeder 96, die an einem Stift 97 gelagert ist, an den Innenstern 50 bzw. den Außenring 44 angepresst. Diese Ausgestaltung hilft, Eigenbewegungen und Schwingungen der Freilaufrollen 42 zu vermeiden, so dass Zustände umgangen werden, in denen die Rollen 42 nicht ideal an den Spalt angepresst werden und möglicherweise mit dem Außenring 44 nicht in Eingriff gelangen, wodurch Schlupf entsteht.

Die V-Blattfeder 96 stützt sich jeweils mit ihren beiden Schenkeln an einer Rolle 42 und somit an zwei gegenüberliegenden Rollen ab. Dies bedeutet, dass auf jede Rolle zwei Kraftkomponenten F₁, F₂, ausgeübt durch zwei benachbarte Blattfedern 96, wirken, wobei die resultierende Kraft derart gewählt ist, dass sie nahe der Selbsthemmung der Rollen 42 wirkt, was einem Winkel von etwa 76° entspricht. Der Kraftfluss ist über die Gesamtzahl der Rollen geschlossen. Die Feder 96 ist drehbar auf einem innen liegenden Stift 97, der zwischen den Schenkeln des V's liegt, gelagert. Der Stift 97 ist ortsfest zum Innenstern 50 platziert. Dadurch wird der Federweg verkürzt, da die Feder 96 mitschwenkt.

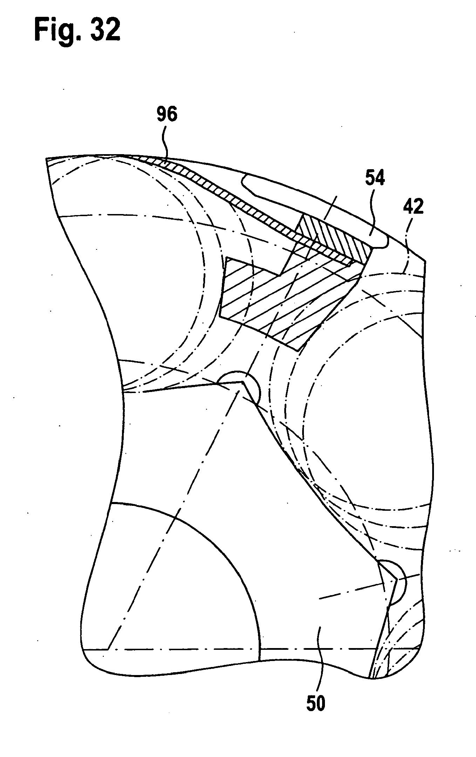

Die Anpressung der Rollen 42 unter einem Winkel nahe der Selbsthemmungsgrenze zur Innensternfläche 50 ist wesentlich, da dadurch eine hohe Reibkraft erzielt wird, ohne die Rolle einzuklemmen. Außerdem wird gleichzeitig ein Anliegen der Rollen 42 am Außenring 44 nach dem Verlassen des Spalts verhindert und der Energieinhalt der Rolle 42 begrenzt. Die Verwendung einer V-förmigen Blattfeder 96, wie es in Figur 30 und 31 gezeigt ist, und damit die Zerlegung der Kraft nahe der Selbsthemmung in zwei Kraftkomponenten ist bevorzugt, um die Bauteile problemlos mit den erforderlichen Abmaßen konstruieren zu können. Eine Ausgestaltung, bei welcher die Federung mit nur einer Blattfeder 96 erfolgt, ist in Figur 32 dargestellt. Um die Blattfeder 96 jedoch ausreichend stabil zu platzieren, so dass eine resultierende Kraft F_{RES} von etwa 76° auf die Rolle 42 wirkt, wird die Feder 96 mittels einer Halterung am Käfig 54 für die Rollen 42 befestigt, so dass sie sich mit der Rolle mitdrehen kann und nicht in den Spalt gezogen wird.

Alternativ könnte die Feder 96 seitlich vom Außenring platziert sein, wobei die Rollen entsprechend über den Außenring überstehen.

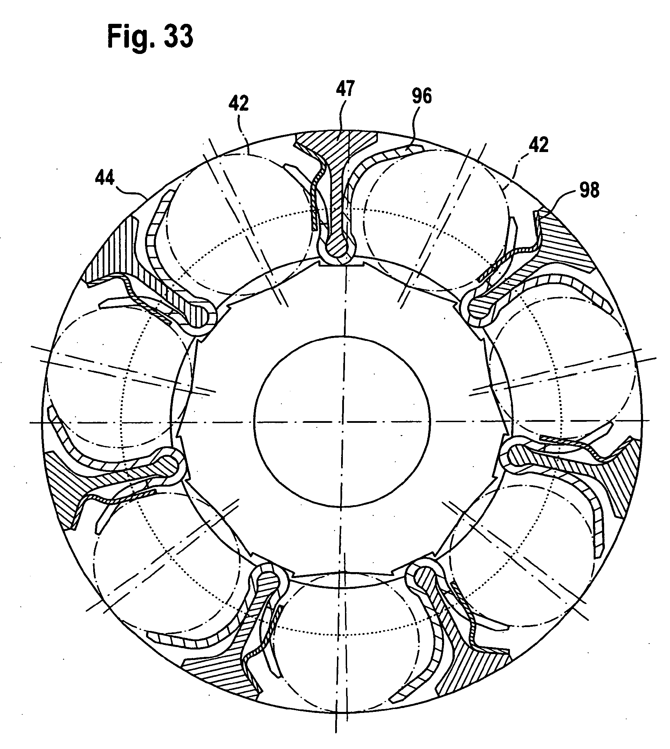

Die Ausführungsform nach Figur 33 unterscheidet sich von den Ausführungsformen nach Figuren 31 und 30 dadurch, dass eine zusätzliche Grundanpressfeder 98 vorgesehen ist, welche konstant auf die Rollen 42 wirkt und dadurch die Verluste im Spalt minimiert. Die Rollen werden somit konstant mit einer bestimmten Grundanpresskraft an den Spalt gedrückt. Zusätzlich kann auch noch eine (nicht dargestellte) Dämpfungseinrichtung, die vorzugsweise richtungsabhängig ist, vorgesehen werden, wodurch die Rollen beim Austritt aus dem Spalt bis zur Geschwindigkeit Null abgebremst werden und anschließend durch die Last der Grundanpressfeder 98 wieder an den Spalt gedrückt werden.

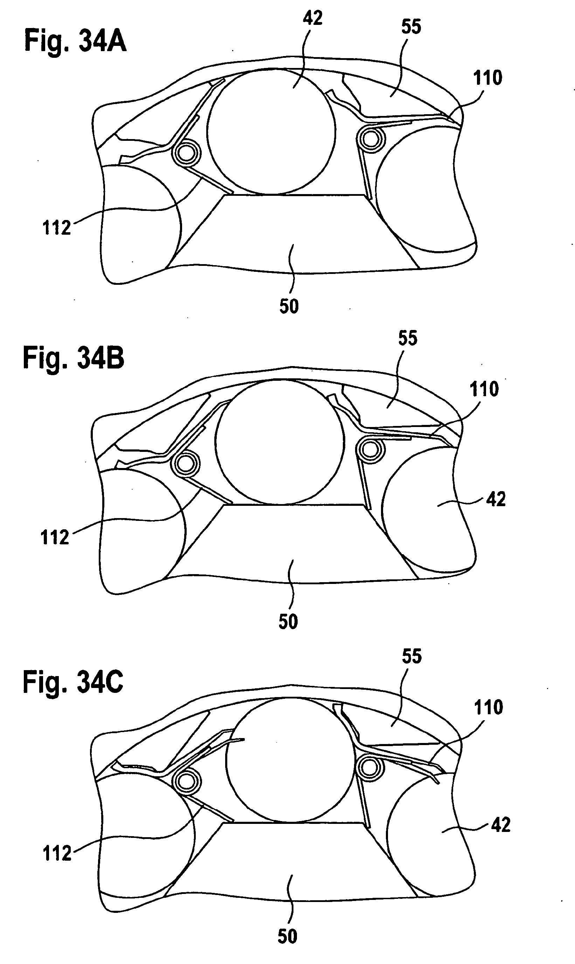

Zum Erzielen einer hohen Dämpfungswirkung ist ferner die Anpressung mittels einer S-Blattfeder 110, wie sie in Figur 34 gezeigt ist, geeignet. Insbesondere wird durch diese Anordnung erreicht, dass sich die Rollen 42 stets relativ zur Feder 110 bewegen und sich die Feder 110 nicht mit den Rollen 42 mitbewegt. Dadurch kann eine große Reibungsarbeit und somit hohe Dämpfung erreicht werden, wodurch die Rollen 42 zuverlässig in ihrer Position gehalten werden. In Figur 34a bis Figur 34c ist die Anordnung beispielhaft in drei unterschiedlichen Positionen gezeigt, nämlich in Figur 34a bei einer Freilaufanfederung in gespannter Stellung, in Figur 34b bei einer Freilaufanfederung in der Stellung der Anlage am Spalt und in Figur 34c derart, dass die Rolle am Anschlag ist. Durch die Verwendung einer S-Feder 110, wie es in Figur 34a bis c dargestellt ist, wird die nahe der Selbsthemmung wirkende Kraft (Anpressung der Rollen unter einem Winkel von etwa 76°) in zwei Teilkräfte F₁, F₂ zerlegt, was die Anordnung der Federkomponente in der Nähe des Spalts vereinfacht. Eine solche S-Blattfeder 110 stützt sich an zwei nebeneinander liegenden Rollen 42 ab, und leitet in jede der Rollen 42, gegen die sie sich stützt, eine Kraftkomponente ein, die zu der nahe der Selbsthemmung wirkenden Kraft F_{RES} beiträgt. Der Kraftfluss insgesamt wird über die Gesamtzahl der Rollen geschlossen.

Die Feder 110 ist am Gleitlager 55 drehbar gelagert. Der Drehpunkt liegt auf einer gedachten Verbindungslinie der Berührpunkte der Feder 110 mit den zwei benachbarten Rollen 42 oder alternativ in einem maximalen senkrechten Abstand zu dieser Linie, der maximal ein Viertel der Länge der Linie beträgt. Der Drehpunkt ist vorzugsweise direkt im Gleitlager integriert. Außerdem ist das in Richtung Klemmspalt angeordnete Teilstück der Feder kürzer als der gegenüberliegende Teil, ausgehend vom Drehpunkt am Gleitlager 55. Dadurch wird eine Anpresskraft F_{RES} erzielt, die in Richtung Klemmspalt wirkt. Gleichzeitig bleibt der Hauptanteil der Federkraft senkrecht zum Klemmspalt gerichtet, und erzeugt eine dämpfende Reibungskraft. Bei der in Figur 34 gezeigten Ausführungsform ist in Reihe zur S-Blattfeder 110 eine Schenkelfeder 112 angeordnet, welche als Grundanpressfeder wirkt und eine gleichmäßige Grundanpressung am Spalt garantiert. Die Grundanpressfeder 112 kann entfallen, wenn die durch die S-Feder 110 bewirkte Grundanpresskraft ausreicht. Alternativ könnte in die S-Feder 110 ein zusätzliches, stets in Richtung Klemmspalt wirkendes Kraftelement integriert sein, das die Grundanpressung übernimmt.

Zum Erzielen einer definierten resultierenden Anpresskraft, die im Wesentlichen nahe der Selbsthemmungsgrenze wirkt, kann die S-Feder 110 konstruktiv derart gestaltet werden, dass sie einen variablen Querschnitt aufweist und im Wesentlichen konstante Biegespannung besitzt. Alternativ kann die S-Feder 110 geschichtet gebildet werden, beispielsweise gefalzt oder als Verbundteil zweier einzelner Federbleche. Insbesondere wenn mehrere einzelne Federbleche durch Schweißpunkte verbunden sind, um die Montage zu vereinfachen, ist eine kostengünstige Fertigung in großen Stückzahlen möglich.

Als Alternative zu der gegen beide Rollen in Anschlag liegenden S-Feder 110 kann eine Vierfachschenkelfeder verwendet werden, die ebenfalls am Gleitlager 56 drehbar angeordnet ist.

### Bezugszeichenliste

- 1: Antriebsanordnung
- 2: Getriebe/Kurbelgetriebe
- 3: Gehäuse
- 4: antreibende Welle/Antriebswelle
- 5: getriebene Welle/Ausgangswelle
- 6: Exzenterantrieb
- 7: Freilaufeinrichtung
- 8: Verbindungselement
- 9: Exzentereinheit
- 10: Freilaufeinheit
- 12: Führungsbereich
- 13: Exzenterbauteil
- 14: Wälzlagerung
- 15: Innenverzahnung des Exzenterbauteils
- 16: Ausnehmung
- 17: Verstellwelle
- 18: Außenverzahnung der Verstellwelle
- 21: Mantelfläche
- 26: Verstellmechanismus
- 27: Verstellmotor
- 28: Planetengetriebe
- 32: elektrische Maschine
- 33: Stator
- 35: Zwischenwand
- 36: Rotor
- 37: Planetengetriebe
- 38: Schnittebene
- 39: Blech
- 42: Klemmkörper/Rolle
- 43: Innenring
- 44: Außenring
- 47: Anlenkbereich
- 47a: Achse
- 48: Ende
- 49: Pleuelauge
- 50: Innenstern/Polygonprofil
- 51: Anpressfläche/Flanke
- 52: Anpressfläche/Flanke
- 53: Anpresselement
- 54: Käfig
- 55: Gleitlager
- 56: Gleitschuh
- 56a: gewölbte Fläche
- 56b: gewölbte Fläche
- 57: Seitenscheibe
- 58: Abschlussscheibe
- 60: Räder
- 61: Vorderachse
- 62: Hinterachse
- 65: Kegelradstufe
- 66: Kegelrad
- 67: Nabe
- 68: Stimtrieb
- 69: Zahnradtrieb, Zahnriemen, Kettentrieb
- 70: Brennkraftmaschine
- 71: Kurbelwelle
- 72: Umschaltmechanismus
- 73: Profilstab/Stabelement/Flachprofil
- 73a: Anschlagsfläche
- 73b: Bewegungsfläche
- 73c: Bohrung
- 74: Scheibe
- 75: Doppelschenkelfeder
- 76: Rohr
- 77: Drehpunkt
- 80: Zahnriementrieb
- 81: Sicherungsring
- 85: Anschlagselement
- 86: fester Anschlag
- 87: fester Anschlag
- 88: Bolzen
- 89: Gleitlager
- 90: Innenwelle
- 91: äußeres Rohr
- 92: Klauenkupplung
- 93: Anlauffläche
- 94: Zahnsegment
- 95: Fliehgewicht
- 96: Blattfeder
- 97: Stift
- 98: Grundanpressfeder
- 101: Abtriebshohlrad
- 102: Kurvenscheibe
- 103: Gehäuse
- 104: Bolzen
- 105: Freilauf
- 106: Zwischengetriebe
- 110: S-Blattfeder
- 112: Schenkelfeder
- 114: Zahnrad
- 115: Hohlrad
- 116: Elektromotor

## Patentansprüche

1. Antriebsanordnung (1), enthaltend ein von einem Motor (70) antreibbares Getriebe (2), das eine mit dem Motor kuppelbare, antreibende Welle (4) und wenigstens eine getriebene Welle (5) besitzt, die durch einen auf der antreibenden Welle vorgesehenen Exzenterantrieb (9) und eine auf der getriebenen Welle vorgesehene Freilaufeinrichtung (7) miteinander verbunden sind, wobei ein Verbindungselement (8) zwischen dem Exzenterantrieb und der Freilaufeinrichtung (7) vorgesehen ist und wobei die getriebene Welle (5) eine angetriebene Achse eines Fahrzeugs ist und wobei die getriebene Welle (5) ein an einem inneren Element (90) abgestütztes Rohrelement (91) enthält, das die Freilaufeinrichtung (7) trägt, wobei das innere Element die getriebene Achse eines Fahrzeugs bildet, **dadurch gekennzeichnet, dass** das innere Element (90) und das Rohrelement (91) zueinander Spiel haben und ein Kupplungselement (92) vorgesehen ist, um eine drehfeste Verbindung zwischen dem inneren Element und dem Rohrelement zu erzielen.

2. Antriebsanordnung (1) nach Anspruch 1, **dadurch gekennzeichnet, dass** die Freilaufeinrichtung (7) mehrere, vorzugsweise 4 oder 6, Freiläufe (10) enthält.

3. Antriebsanordnung (1) nach einem der vorhergehenden Ansprüche, **dadurch gekennzeichnet, dass** mehrere Verbindungselemente (8), vorzugsweise 4 oder 6 Verbindungselemente vorgesehen sind.

4. Antriebsanordnung (1) nach einem der vorhergehenden Ansprüche, **dadurch gekennzeichnet, dass** das Kupplungselement (92) zumindest im Stillstand des Getriebes (2) geöffnet werden kann.

5. Antriebsanordnung (1) nach einem der vorhergehenden Ansprüche, **dadurch gekennzeichnet, dass** das Kupplungselement (92) eine axiale Klauenkupplung ist.

6. Antriebsanordnung (1) nach einem der vorhergehenden Ansprüche, **dadurch gekennzeichnet, dass** die Freilaufeinrichtung (7) wenigstens einen auf dem Rohrelement (91) mittels eines Gleitlagers gelagerten Außenring (44) enthält, wobei das Gleitlager auf das Rohrelement aufgepresst ist.

7. Antriebsanordnung (1) nach Anspruch 6, **dadurch gekennzeichnet, dass** zwischen Gleitlager und Außenring (44) in axialer Richtung Spiel vorhanden ist.

8. Antriebsanordnung (1) nach einem der vorhergehenden Ansprüche, **dadurch gekennzeichnet, dass** der Exzenterantrieb (9) mittels einer Betätigungseinrichtung verstellbar ist.

9. Antriebsanordnung (1) nach Anspruch 8, **dadurch gekennzeichnet, dass** die Betätigungseinrichtung einen Verstellmotor (27), insbesondere einen elektrischen Motor, enthält.

10. Antriebsanordnung (1) nach Anspruch 9, **dadurch gekennzeichnet, dass** der Verstellmotor (27) koaxial zur antreibenden Welle (4) angeordnet ist und mit dieser mitdreht.

11. Antriebsanordnung (1) nach Anspruch 9 oder 10, **dadurch gekennzeichnet, dass** zwischen Verstellmotor (27) und der antreibenden Welle ein Übersetzungsgetriebe (28) vorgesehen ist.

12. Antriebsanordnung (1) nach einem der vorhergehenden Ansprüche, **dadurch gekennzeichnet, dass** die antreibende Welle (4) hohl ist.

13. Antriebsanordnung (1) nach einem der vorhergehenden Ansprüche, **dadurch gekennzeichnet, dass** die getriebene Welle (5) die Hinterradachse eines Zweirads ist.

14. Antriebsanordnung (1) für ein Fahrzeug, enthaltend für jedes angetriebene Rad des Fahrzeugs ein von einem Motor (70) antreibbares Getriebe (2), das eine mit dem Motor kuppelbare, antreibende Welle (4) und wenigstens eine getriebene Welle (5) besitzt, die durch einen auf der antreibenden Welle vorgesehenen Exzenterantrieb (9) und eine auf der getriebenen Welle vorgesehene Freilaufeinrichtung (7) miteinander verbunden sind, wobei ein Verbindungselement (8) zwischen dem Exzenterantrieb und der Freilaufeinrichtung vorgesehen ist und wobei das Getriebe (2) für jedes der angetriebenen Räder (60) des Fahrzeugs von dem Getriebe eines anderen angetriebenen Rads des Fahrzeugs unabhängig ist.

15. Antriebsanordnung (1) nach Anspruch 14, **dadurch gekennzeichnet, dass** der Exzenterantrieb (9) jedes Getriebes (2) mittels einer Betätigungseinrichtung verstellbar ist, wobei die Betätigungseinrichtung einen Verstellmotor, insbesondere einen elektrischen Motor (27) enthält, der im Wesentlichen koaxial zur antreibenden Welle (4) angeordnet ist.

16. Antriebsanordnung (1) nach Anspruch 15, **dadurch gekennzeichnet, dass** zwischen dem Verstellmotor (27) und der antreibenden Welle (4) ein Zwischengetriebe (26), insbesondere ein um den Verstellmotor konzentrisch angeordnetes Planetengetriebe, vorgesehen ist.

17. Antriebsanordnung (1) nach einem der Ansprüche 14 bis 16, **dadurch gekennzeichnet, dass** die antreibende Welle (4) und die getriebene Welle (5) des Getriebes (2) die gleiche Richtung wie die Achse der jeweils angetriebenen Räder (60) des Fahrzeugs bei Geradeausfahrt des Fahrzeugs haben.

18. Antriebsanordnung (1) nach Anspruch 17, **dadurch gekennzeichnet, dass** die getriebene Welle (5) des Getriebes (2) die Achse oder Gelenkwelle (61) des jeweils angetriebenen Rads (60) des Fahrzeugs ist.

19. Antriebsanordnung (1) nach einem der Ansprüche 14 bis 18, **dadurch gekennzeichnet, dass** das Fahrzeug ein Kraftfahrzeug mit zwei angetriebenen Rädern (60) ist und zwei, jeweils einem Rad zugeordneten Getrieben (2), wobei die Antriebsanordnung (1) einen Kegeltrieb (65) enthält, der das Drehmoment des Motors (70) auf die antreibenden Wellen (4) der Getriebe (2) derart aufteilt, dass die antreibenden Wellen der Getriebe entgegen gesetzte Drehrichtungen aufweisen.

20. Antriebsanordnung (1) nach Anspruch 19, **dadurch gekennzeichnet, dass** der Kegeltrieb (65) mit der antreibenden Welle (4) eines Getriebes kämmt, die mit der antreibenden Welle (4) des anderen Getriebes durch eine Nabe mit Zwischenverzahnung (67) verbunden ist.

21. Antriebsanordnung (1) nach Anspruch 19 oder 20, **dadurch gekennzeichnet, dass** die getriebenen Wellen (5) gemeinsame Antriebsachsen der Räder (60) sind, wobei jedem Getriebe zugeordnet eine elektrische Maschine (32) zum Erzeugen eines Schubmoments vorgesehen ist, wobei die elektrischen Maschinen einen gemeinsamen Stator (33) und jeweils einen eigenen Rotor (36) besitzen.

22. Antriebsanordnung (1) nach Anspruch 21, **dadurch gekennzeichnet, dass** zur Übersetzung ins Schnelle zwischen der elektrischen Maschine (32) und der getriebenen Welle (5) jeweils ein Planetengetriebe (37) angeordnet ist.

23. Antriebsanordnung (1) nach einem der Ansprüche 14 bis 18, **dadurch gekennzeichnet, dass** das Fahrzeug ein Kraftfahrzeug mit zwei angetriebenen Rädern (60) ist, und zwei Kegeltriebe (50) vorgesehen sind, die das Drehmoment des Motors (70) auf die antreibenden Wellen (4) der Getriebe (2) derart aufteilen, dass die antreibenden Wellen der Getriebe gleichsinnige Drehrichtungen aufweisen.

24. Antriebsanordnung (1) nach Anspruch 23, **dadurch gekennzeichnet, dass** die Freilaufeinrichtungen (7) der Getriebe derart vorgesehen sind, dass die getriebenen Wellen (5) der Getriebe gleichsinnige Drehrichtungen aufweisen.

25. Antriebsanordnung (1) nach einem der Ansprüche 14 bis 18, **dadurch gekennzeichnet, dass** das Fahrzeug ein Kraftfahrzeug mit vier angetriebenen Rädern (60) ist, wobei jeweils die zwei einer gemeinsamen Radantriebsachse zugeordneten Getriebe (2) in ein gemeinsames Gehäuse (3) integriert sind.

26. Antriebsanordnung (1) nach einem der Ansprüche 14 bis 25, **dadurch gekennzeichnet, dass** die antreibenden Wellen (4) zweier an einer gemeinsamen Achse befindlicher Getriebe (2) eine spiegelbildliche Gestaltung derart aufweisen, dass sich die freien Momente und Massekräfte aufheben.

27. Antriebsanordnung (1) nach einem der Ansprüche 14 bis 26, **dadurch gekennzeichnet, dass** die Übersetzungen der Getriebe (2) voneinander unabhängig einstellbar sind.

28. Antriebsanordnung (1) nach einem der vorhergehenden Ansprüche, **dadurch gekennzeichnet, dass** eine elektrische Maschine (32) zur Erzeugung eines Schubmoments vorgesehen ist, die mittels mindestens eines Schaltelements (104) wahlweise nur mit der Abtriebsseite des Getriebes (2) oder nur mit der Antriebsseite des Getriebes (2) verbindbar ist oder gleichzeitig mit der Abtriebsseite und der Antriebsseite.

29. Antriebsanordnung nach Anspruch 28, **dadurch gekennzeichnet, dass** eine Betätigungseinrichtung (26, 27, 28) zur Verstellung des Exzenterantriebs (9) vorgesehen ist und das Schaltelement (104) in Abhängigkeit von der Verstellposition des Exzenterantriebs eine Verbindung der elektrischen Maschine (32) mit der Antriebsseite des Getriebes und/oder der Abtriebsseite des Getriebes bewirkt.

30. Antriebsanordnung (1) nach Anspruch 29, **dadurch gekennzeichnet, dass** die Verstellposition eine Winkelposition einer Verstellwelle (17) für den Exzenterantrieb (9) ist.

31. Antriebsanordnung (1) nach Anspruch 30, **dadurch gekennzeichnet, dass** die Betätigungseinrichtung einen Verstellmotor (27) und ein eine Winkelbewegung in die Verstellwelle einleitendes Übertragungselement (28) enthält, wobei am Verstellmotor und/oder dem Übertragungselement mindestens eine die Winkelposition der Verstellwelle repräsentierende Kurvenscheibe (102) vorgesehen ist, mit der das mindestens eine Schaltelement (104) derart zusammenwirkt, dass es in Abhängigkeit von der Winkelposition der Kurvenscheibe eine Verbindung der elektrischen Maschine (32) mit der Antriebsseite des Getriebes und/oder der Abtriebsseite des Getriebes bewirkt.

32. Antriebsanordnung (1) nach Anspruch 31, **dadurch gekennzeichnet, dass** das Übertragungselement (28) eine Übersetzungseinrichtung, insbesondere ein Planetengetriebe ist, wobei am Außenumfang des Abtriebs der Übersetzungseinrichtung, insbesondere des Abtriebshohlrads (101) des Planetengetriebes, die Kurvenscheibe (102) vorgesehen ist.

33. Antriebsanordnung (1) nach einem der Ansprüche 31 oder 32, **dadurch gekennzeichnet, dass** das mindestens ein Schaltelement (104) durch die mindestens eine Kurvenscheibe (102) bewegt wird und eine formschlüssige Kupplung zwischen einem Anker (36) der elektrischen Maschine und der antreibenden Welle oder einem mit der antreibenden Welle fest verbundenen Bauteil herstellen kann.

34. Antriebsanordnung (1) nach Anspruch 33, **dadurch gekennzeichnet, dass** das Schaltelement (104) ein Bolzen oder Stift ist.

35. Antriebsanordnung (1) nach einem der Ansprüche 28 bis 34, **dadurch gekennzeichnet, dass** die elektrische Maschine (32) mit der Antriebsseite des Getriebes (2) über eine Übersetzungseinrichtung (106) verbindbar ist.

36. Antriebsanordnung (1) nach einem der Ansprüche 28 bis 35, **dadurch gekennzeichnet, dass** die elektrische Maschine über eine Übersetzungseinrichtung (106) mit der Abtriebsseite des Getriebes (2) verbindbar ist.

37. Antriebsanordnung (1) nach einem der vorhergehenden Ansprüche, **dadurch gekennzeichnet, dass** die Freilaufeinrichtung (7) mindestens eine Freilaufeinheit (10) enthält, die Klemmkörper (42) aufweist, die zwischen einem Innenring (50) und einem Außenring (44) derart angeordnet sind, dass die Klemmkörper in zumindest eine Relativdrehrichtung zwischen Innenring und Außenring diese Verdrehung blockieren, wodurch beide Ringe gemeinsam gedreht werden.

38. Antriebsanordnung (1) nach Anspruch 37, **dadurch gekennzeichnet, dass** der Innenring (50) durch die mit einem Polygonprofil versehene Außenfläche der getriebenen Welle (5) gebildet wird, wobei vorzugsweise jedem Klemmkörper (42) zwei Flanken (51, 52) des Polygonprofils zugeordnet sind.

39. Antriebsanordnung (1) nach einem der Ansprüche 37 bis 38, **dadurch gekennzeichnet, dass** die Klemmkörper Rollen (42) sind.

40. Antriebsanordnung (1) nach einem der Ansprüche 37 bis 39, **dadurch gekennzeichnet, dass** ferner eine Anpresseinrichtung (75, 96, 110) für die Klemmkörper (42) vorgesehen ist, welche in Ruhelage die Klemmkörper (42) an den Innenring (50) und/oder den Außenring (44) anpresst, wobei die Anpressung an den Innenring vorzugsweise unter einem Winkel nahe der Selbsthemmungsgrenze derart ist, dass die Klemmkörper in der Position liegen, in der sie die Verdrehung des Innenrings relativ zu dem Außenring blockieren.

41. Antriebsanordnung (1) nach Anspruch 40, **dadurch gekennzeichnet, dass** die Anpresseinrichtung ein Federelement (75, 96, 110) enthält, welches zwischen zwei benachbarten Klemmkörpern gelagert ist, insbesondere eine Doppelschenkelfeder.

42. Antriebsanordnung (1) nach Anspruch 41, **dadurch gekennzeichnet, dass** das Federelement (75) relativ zum Innen- und Außenring drehbar an einem Stiftbauteil (73) gelagert ist, wobei vorzugsweise durch das Schwenken des Federelements der Klemmkörper (42) in eine von drei Positionen gebracht wird: eine Kraftschlussposition zwischen Innen- und Außenring für eine erste Drehrichtung, eine Kraftschlussposition zwischen Innen- und Außenring für eine zweite Drehrichtung und eine Neutralposition.

43. Antriebsanordnung (1) nach Anspruch 42, **dadurch gekennzeichnet, dass** zwischen jeweils, zwei benachbarten Klemmkörpern (42) ein Stiftbauteil (73) vorgesehen ist.

44. Antriebsanordnung (1) nach einem der Ansprüche 42 bis 43, **dadurch gekennzeichnet, dass** am freien Ende des Stiftbauteils (73) ein mit dem Stiftbauteil fest verbundenes Zahnrad (114) vorgesehen ist, wobei die Zahnräder der Stiftbauteile durch ein gemeinsames antreibbares Hohlrad (115) umfasst werden und mit diesem kämmen.

45. Antriebsanordnung (1) nach einem der Ansprüche 42 bis 45, **dadurch gekennzeichnet, dass** das Stiftbauteil (73) ein mit einer relativ zum Innen- und Außenring drehbaren Scheibe (74) gelagerter Profilstab ist, wobei das Federelement (75) bezüglich des Profilstabs drehfest ist.

46. Antriebsanordnung (1) nach Anspruch 45, **dadurch gekennzeichnet, dass** der Profilstab (73) eine Kontur besitzt, welche zwei Flächen (73a) für einen Anschlag eines Klemmkörpers (42) aufweist und dessen andere Flächen (73b) eine Krümmung derart besitzen, um den Klemmkörper von einer Position zum Kraftschluss zwischen Innen- und Außenring für eine erste Drehrichtung zu einer weiteren Position zum Kraftschluss zwischen Innen- und Außenring für eine zweite Drehrichtung unter geringer Kraftaufwendung zu bewegen.

47. Antriebsanordnung (1) nach einem der Ansprüche 40 bis 46, **dadurch gekennzeichnet, dass** die Anpresseinrichtung eine Anpresskraft (F_{RES}) erzeugt, welche die Summe aus zwei einzeln aufgebrachten Kraftkomponenten (F₁ F₂) ist.

48. Antriebsanordnung (1) nach Anspruch 47, **dadurch gekennzeichnet, dass** das Federelement (96) eine im Wesentlichen V-förmige Blattfeder ist, die auf jeden der benachbarten Klemmkörper (42) mit jeweils einem ihrer Schenkel eine Anpresskraft aufbringt.

49. Antriebsanordnung (1) nach Anspruch 47, **dadurch gekennzeichnet, dass** das Federelement eine S-Blattfeder (110) ist, die auf jeden der benachbarten Klemmkörper (42) mit jeweils einem ihrer Schenkel eine Anpresskraft aufbringt.

50. Antriebsanordnung (1) nach Anspruch 49, **dadurch gekennzeichnet, dass** die S-Blattfeder (110) drehbar gelagert ist, wobei der Drehpunkt auf einer Verbindungslinie der Berührpunkte der Feder (110) mit den zwei benachbarten Klemmkörpern (42) oder in einem senkrechten Abstand zu dieser Linie von maximal ¼ der Länge der Linie liegt.

51. Antriebsanordnung (1) nach einem der Ansprüche 49 oder 50, **dadurch gekennzeichnet, dass** die Freilaufeinheit weiter ein Gleitlager (55) zwischen jeweils zwei benachbarten Klemmkörpern enthält, wobei die S-Blattfeder (110) am Gleitlager gelagert ist.

52. Antriebsanordnung (1) nach einem der Ansprüche 49 bis 51, **dadurch gekennzeichnet, dass** die S-Blattfeder (110) ein Träger konstanter Biegespannung mit variablem Querschnitt ist.

53. Antriebsanordnung (1) nach einem der Ansprüche 49 bis 51, **dadurch gekennzeichnet, dass** die S-Blattfeder (110) als Schichtbauteil aus mehreren Federblechen gestaltet ist.

54. Antriebsanordnung (1) nach einem der Ansprüche 37 bis 53, **dadurch gekennzeichnet, dass** eine zusätzliche Grundanpresseinrichtung (98) vorgesehen ist, welche die Klemmkörper (42) mit einer Grundanpresskraft gegen den Außenring (44) presst.

55. Antriebsanordnung (1) nach einem der Ansprüche 37 bis 54, **dadurch gekennzeichnet, dass** ein Gleitlager (55) zwischen Innen- und Außenring vorgesehen ist, welches drehfest auf dem Innenring (50) sitzt und den Außenring (44) gegenüber dem Innenring zentriert.

56. Antriebsanordnung (1) nach Anspruch 55, **dadurch gekennzeichnet, dass** das Gleitlager (55) als L-Profil gestaltet ist.

57. Antriebsanordnung (1) nach Anspruch 55 oder 56, **dadurch gekennzeichnet, dass** an der radialen Außenfläche des Gleitlagers (55) in Umfangsrichtung mehrere Gleitschuhe (56) angebracht sind, welche den Außenring (44) zentrieren.

58. Antriebsanordnung (1) nach Anspruch 57, **dadurch gekennzeichnet, dass** jeder Gleitschuh zwei in radialer Richtung nach Innen gerichtete gewölbte Flächen (56a, 56b) zur Abstützung des Klemmkörpers (42) aufweist.

59. Antriebsanordnung (1) nach einem der Ansprüche 55 bis 58, **dadurch gekennzeichnet, dass** eine Abschlussscheibe (58) vorgesehen ist, welche zusammen mit dem Gleitlager (56) einen Käfig für die Klemmkörper (42) bildet.

60. Verwendung einer Freilaufeinrichtung (7) in einer Antriebsanordnung (1) nach einem der Ansprüche 37 bis 59, wobei die Freilaufeinrichtung (7) mindestens eine Freilaufeinheit (10) enthält, die Klemmkörper (42) aufweist, die zwischen einem Innenring (50) und einem Außenring (44) derart angeordnet sind, dass die Klemmkörper in zumindest eine Relativdrehrichtung zwischen Innenring und Außenring diese Verdrehung blockieren, wodurch beide Ringe gemeinsam gedreht werden.

## Claims

1. Drive arrangement (1), comprising a gearbox (2) which can be driven by an engine (70) and which has a driving shaft (4), which can be coupled to the engine, and at least one driven shaft (5), which driving shaft (4) and driven shaft (5) are connected to one another by means of an eccentric drive (9), which is provided on the driving shaft, and an overrunning clutch device (7) which is provided on the driven shaft, with a connecting element (8) being provided between the eccentric drive and the overrunning clutch device (7), and with the driven shaft (5) being a driven axle of a vehicle and with the driven shaft (5) comprising a tube element (91) which is supported on an inner element (90) and which supports the overrunning clutch device (7), with the inner element forming the driven axle of a vehicle, **characterized in that** the inner element (90) and the tube element (91) have a degree of play with respect to one another, and a coupling element (92) is provided in order to obtain a rotationally fixed connection between the inner element and the tube element.

2. Drive arrangement (1) according to Claim 1, **characterized in that** the overrunning clutch device (7) comprises a plurality, preferably 4 or 6, overrunning clutches (10).

3. Drive arrangement (1) according to one of the preceding claims, **characterized in that** a plurality of connecting elements (8), preferably 4 or 6 connecting elements, are provided.

4. Drive arrangement (1) according to one of the preceding claims, **characterized in that** the coupling element (92) can be opened at least when the gearbox (2) is at a standstill.

5. Drive arrangement (1) according to one of the preceding claims, **characterized in that** the coupling element (92) is an axial claw coupling.

6. Drive arrangement (1) according to one of the preceding claims, **characterized in that** the overrunning clutch device (7) comprises at least one outer ring (44) which is mounted by means of a plain bearing on the tube element (91), with the plain bearing being pressed onto the tube element.

7. Drive arrangement (1) according to Claim 6, **characterized in that** a degree of play is provided between the plain bearing and the outer ring (44) in the axial direction.

8. Drive arrangement (1) according to one of the preceding claims, **characterized in that** the eccentric drive (9) can be adjusted by means of an actuating device.

9. Drive arrangement (1) according to Claim 8, **characterized in that** the actuating device comprises an adjusting motor (27), in particular an electric motor.

10. Drive arrangement (1) according to Claim 9, **characterized in that** the adjusting motor (27) is arranged coaxially with respect to the driving shaft (4) and rotates together with the latter.

11. Drive arrangement (1) according to Claim 9 or 10, **characterized in that** a step-up gearing (28) is provided between the adjusting motor (27) and the driving shaft.

12. Drive arrangement (1) according to one of the preceding claims, **characterized in that** the driving shaft (4) is hollow.

13. Drive arrangement (1) according to one of the preceding claims, **characterized in that** the driven shaft (5) is the rear-wheel axle of a motorcycle.

14. Drive arrangement (1) for a vehicle, comprising, for each driven wheel of the vehicle, a gearbox (2) which can be driven by an engine (70) and which has a driving shaft (4), which can be coupled to the engine, and at least one driven shaft (5), which driving shaft (4) and driven shaft (5) are connected to one another by means of an eccentric drive (9), which is provided on the driving shaft, and an overrunning clutch device (7) which is provided on the driven shaft, with a connecting element (8) being provided between the eccentric drive and the overrunning clutch device, and with the gearbox (2) for each of the driven wheels (60) of the vehicle being independent of the gearbox of another driven wheel of the vehicle.

15. Drive arrangement (1) according to Claim 14,
**characterized in that** the eccentric drive (9) of each gearbox (2) can be adjusted by means of an actuating device, with the actuating device comprising an adjusting motor, in particular an electric motor (27), which is arranged substantially coaxially with respect to the driving shaft (4).

16. Drive arrangement (1) according to Claim 15, **characterized in that** an intermediate gearing (26), in particular a planetary gear set which is arranged concentrically around the adjusting motor, is provided between the adjusting motor (27) and the driving shaft (4).

17. Drive arrangement (1) according to one of Claims 14 to 16, **characterized in that** the driving shaft (4) and the driven shaft (5) of the gearbox (2) have the same direction as the axes of the respectively driven wheels (60) of the vehicle when the vehicle is driving in a straight line.

18. Drive arrangement (1) according to Claim 17, **characterized in that** the driven shaft (5) of the gearbox (2) is the axle or cardan shaft (61) of the respectively driven wheel (60) of the vehicle.

19. Drive arrangement (1) according to one of Claims 14 to 18, **characterized in that** the vehicle is a motor vehicle having two driven wheels (60) and having two gearboxes (2) which are assigned to in each case one wheel, with the drive arrangement (1) comprising a bevel-gear drive (65) which distributes the torque of the engine (70) between the driving shafts (4) of the gearbox (2) in such a way that the driving shafts of the gearbox have opposite rotational directions.

20. Drive arrangement (1) according to Claim 19, **characterized in that** the bevel-gear drive (65) meshes with the driving shaft (4) of a gearbox which is connected to the driving shaft (4) of the other gearbox by means of a hub with an intermediate toothing (67).

21. Drive arrangement (1) according to Claim 19 or 20, **characterized in that** the driven shafts (5) are common drive axles of the wheels (60), with each gearbox being assigned an electric machine (32) for generating a thrust torque, with the electric machines having a common stator (33) and in each case a separate rotor (36).

22. Drive arrangement (1) according to Claim 21, **characterized in that**, for the step-up transmission ratio, in each case one planetary gear set (37) is arranged between the electric machine (32) and the driven shaft (5).

23. Drive arrangement (1) according to one of Claims 14 to 18, **characterized in that** the vehicle is a motor vehicle having two driven wheels (60), and two bevel-gear drives (50) are provided which distribute the torque of the engine (70) between the driving shafts (4) of the gearbox (2) in such a way that the driving shafts of the gearbox have the same rotational direction.

24. Drive arrangement (1) according to Claim 23, **characterized in that** the overrunning clutch devices (7) of the gearbox are provided in such a way that the driven shafts (5) of the gearbox have the same rotational direction.

25. Drive arrangement (1) according to one of Claims 14 to 18, **characterized in that** the vehicle is a motor vehicle with four driven wheels (60), with the in each case two gearboxes (2) assigned to a common wheel drive axle being integrated in a common housing (3).

26. Drive arrangement (1) according to one of Claims 14 to 25, **characterized in that** the driving shafts (4) of two gearboxes (2) which are situated on a common axis have a mirror-symmetrical configuration, in such a way that the free moments and mass forces are cancelled out.

27. Drive arrangement (1) according to one of Claims 14 to 26, **characterized in that** the transmission ratios of the gearbox (2) can be adjusted independently of one another.

28. Drive arrangement (1) according to one of the preceding claims, **characterized in that** an electric machine (32) for generating a thrust torque is provided, which electric machine (32) can be connected by means of at least one shift element (104) selectively only to the drive output side of the gearbox (2) or only to the drive input side of the gearbox (2) or simultaneously to the drive output side and the drive input side.

29. Drive arrangement according to Claim 28, **characterized in that** an actuating device (26, 27, 28) for adjusting the eccentric drive (9) is provided, and the shift element (104) generates a connection of the electric machine (32) to the drive input side of the gearbox and/or to the drive output side of the gearbox as a function of the adjusting position of the eccentric drive.

30. Drive arrangement (1) according to Claim 29, **characterized in that** the adjusting position is an angular position of an adjusting shaft (17) for the eccentric drive (9).

31. Drive arrangement (1) according to Claim 30, **characterized in that** the actuating device comprises an adjusting motor (27) and a transmission element (28) which introduces an angular movement into the adjusting shaft, with at least one cam disc (102) which represents the angular position of the adjusting shaft being provided on the adjusting motor and/or on the transmission element, with which cam disc (102) the at least one shift element (104) interacts in such a way that said shift element (104) generates a connection of the electric machine (32) to the drive input side of the gearbox and/or to the drive output side of the gearbox as a function of the angular position of the cam disc.

32. Drive arrangement (1) according to Claim 31, **characterized in that** the transmission element (28) is a transmission device, in particular a planetary gear set, with the cam disc (102) being provided on the outer periphery of the drive output of the transmission device, in particular of the drive output ring gear (101) of the planetary gear set.

33. Drive arrangement (1) according to one of Claims 31 or 32, **characterized in that** the at least one shift element (104) is moved by the at least one cam disc (102) and can produce a positively-locking coupling action between an armature (36) of the electric machine and the driving shaft or a component which is fixedly connected to the driving shaft.

34. Drive arrangement (1) according to Claim 33, **characterized in that** the shift element (104) is a bolt or a pin.

35. Drive arrangement (1) according to one of Claims 28 to 34, **characterized in that** the electric machine (32) can be connected to the drive input side of the gearbox (2) by means of a transmission device (106).

36. Drive arrangement (1) according to one of Claims 28 to 35, **characterized in that** the electric machine can be connected by means of a transmission device (106) to the drive output side of the gearbox (2).

37. Drive arrangement (1) according to one of the preceding claims, **characterized in that** the overrunning clutch device (7) comprises at least one overrunning clutch unit (10) which has clamping bodies (42) which are arranged between an inner ring (50) and an outer ring (44) in such a way that the clamping bodies block a relative rotation between the inner ring and the outer ring in at least one relative rotational direction between said inner ring and outer ring, as a result of which the two rings are rotated together.

38. Drive arrangement (1) according to Claim 37, **characterized in that** the inner ring (50) is formed by the outer surface, which is provided with a polygonal profile, of the driven shaft (5), with each clamping body (42) preferably being assigned two flanks (51, 52) of the polygonal profile.

39. Drive arrangement (1) according to one of Claims 37 to 38, **characterized in that** the clamping bodies are rollers (42).

40. Drive arrangement (1) according to one of Claims 37 to 39, **characterized in that** a pressing device (75, 96, 110) for the clamping bodies (42) is also provided, which pressing device (75, 96, 110), in the rest position, presses the clamping bodies (42) against the inner ring (50) and/or against the outer ring (44), with the pressing against the inner ring taking place preferably at an angle close to the self-locking limit, in such a way that the clamping bodies lie in the position in which they block the rotation of the inner ring relative to the outer ring.

41. Drive arrangement (1) according to Claim 40, **characterized in that** the pressing device comprises a spring element (75, 96, 110) which is mounted between two adjacent clamping bodies, in particular a double leg spring.

42. Drive arrangement (1) according to Claim 41, **characterized in that** the spring element (75) is mounted on a pin component (73) so as to be rotatable relative to the inner and outer ring, with the pivoting of the spring element preferably causing the clamping body (42) to be placed in one of three positions: a frictionally engaging position between the inner and outer ring for a first rotational direction, a frictionally engaging position between the inner and outer ring for a second rotational direction, and a neutral position.

43. Drive arrangement (1) according to Claim 42, **characterized in that** a pin component (73) is provided between in each case two adjacent clamping bodies (42).

44. Drive arrangement (1) according to one of Claims 42 to 43, **characterized in that** a gearwheel (114) which is fixedly connected to the pin component is provided on the free end of the pin component (73), with the gearwheels of the pin components being surrounded by, and meshing with, a common drivable ring gear (115).

45. Drive arrangement (1) according to one of Claims 42 to 45, **characterized in that** the pin component (73) is a profiled bar which is mounted with a disc (74) which is rotatable relative to the inner and outer ring, with the spring element (75) being rotationally fixed with respect to the profiled bar.

46. Drive arrangement (1) according to Claim 45, **characterized in that** the profiled bar (73) has a contour which has two surfaces (73a) for the abutment of a clamping body (42) and whose other surfaces (73b) have a curvature in such a way as to move the clamping bodies, with a low expenditure of force, from a position for frictional engagement between the inner and outer rings for a first rotational direction to a further position for frictional engagement between the inner and outer ring for a second rotational direction.

47. Drive arrangement (1) according to one of Claims 40 to 46, **characterized in that** the pressing device generates a pressure force (F_{RES}) which is the sum of two individually imparted force components (F₁, F₂) .

48. Drive arrangement (1) according to Claim 47, **characterized in that** the spring element (96) is a substantially V-shaped leaf spring which, by means of in each case one of its limbs, imparts a pressure force to each of the adjacent clamping bodies (42).

49. Drive arrangement (1) according to Claim 47, **characterized in that** the spring element is an S-shaped leaf spring (110) which, by means of in each case one of its limbs, imparts a pressure force to each of the adjacent clamping bodies (42).

50. Drive arrangement (1) according to Claim 49, **characterized in that** the S-shaped leaf spring (110) is rotatably mounted, with the centre of rotation being situated on a line which connects the points of contact of the spring (110) with the two adjacent clamping bodies (42), or at a perpendicular distance from said line of no more than ¼ of the length of the line.

51. Drive arrangement (1) according to Claim 49 or 50, **characterized in that** the overrunning clutch unit also comprises a plain bearing (55) between in each case two adjacent clamping bodies, with the S-shaped leaf spring (110) being mounted on the plain bearing.

52. Drive arrangement (1) according to one of Claims 49 to 51, **characterized in that** the S-shaped leaf spring (110) is a beam of constant bending stress with a variable cross section.

53. Drive arrangement (1) according to one of Claims 49 to 51, **characterized in that** the S-shaped leaf spring (110) is designed as a layered component composed of a plurality of spring plates.

54. Drive arrangement (1) according to one of Claims 37 to 53, **characterized in that** an additional basic pressing device (98) is provided, which basic pressing device (98) presses the clamping body (42) against the outer ring (44) with a basic pressure force.

55. Drive arrangement (1) according to one of Claims 37 to 54, **characterized in that** a plain bearing (55) is provided between the inner and outer ring, which plain bearing (55) is rotationally fixedly seated on the inner ring (50) and centres the outer ring (44) with respect to the inner ring.

56. Drive arrangement (1) according to Claim 55, **characterized in that** the plain bearing (55) is designed as an L-shaped profile.

57. Drive arrangement (1) according to Claim 55 or 56, **characterized in that** a plurality of sliding shoes (56) are attached to the radial outer surface of the plain bearing (55) in the circumferential direction, which sliding shoes (56) centre the outer ring (44).

58. Drive arrangement (1) according to Claim 57, **characterized in that** each sliding shoe has two curved surfaces (56a, 56b), which point inward in the radial direction, for supporting the clamping body (42).

59. Drive arrangement (1) according to one of Claims 55 to 58, **characterized in that** a closure disc (58) is provided, which closure disc (58), together with the plain bearing (56), forms a cage for the clamping bodies (42).

60. Use of an overrunning clutch device (7) in a drive arrangement (1) according to one of Claims 37 to 59, with the overrunning clutch device (7) comprising at least one overrunning clutch unit (10) which has clamping bodies (42) which are arranged between an inner ring (50) and an outer ring (44) in such a way that the clamping bodies block a relative rotation between the inner ring and the outer ring in at least one relative rotational direction between said inner ring and outer ring, as a result of which the two rings are rotated together.

## Revendications

1. Agencement d'entraînement (1), contenant une transmission (2) pouvant être entraînée par un moteur (70), qui possède un arbre d'entraînement (4) pouvant être accouplé au moteur et au moins un arbre entraîné (5), qui sont connectés l'un à l'autre par un entraînement à excentrique (9) prévu sur l'arbre d'entraînement et par un dispositif de roue libre (7) prévu sur l'arbre entraîné, un élément de connexion (8) étant prévu entre l'entraînement à excentrique et le dispositif de roue libre (7), et l'arbre entraîné (5) étant un essieu entraîné d'un véhicule et l'arbre entraîné (5) présentant un élément tubulaire (91) supporté sur un élément interne (90), qui porte le dispositif de roue libre (7), l'élément interne formant l'essieu entraîné d'un véhicule, **caractérisé en ce que** l'élément interne (90) et l'élément tubulaire (91) ont un jeu entre eux et un élément d'embrayage (92) est prévu, pour produire une connexion solidaire en rotation entre l'élément interne et l'élément tubulaire.

2. Agencement d'entraînement (1) selon la revendication 1, **caractérisé en ce que** le dispositif de roue libre (7) présente plusieurs roues libres (10), de préférence 4 ou 6.

3. Agencement d'entraînement (1) selon l'une quelconque des revendications précédentes, **caractérisé en ce que** plusieurs éléments de connexion (8) sont prévus, de préférence 4 ou 6 éléments de connexion.

4. Agencement d'entraînement (1) selon l'une quelconque des revendications précédentes, **caractérisé en ce que** l'élément d'embrayage (92) peut être ouvert au moins à l'état d'arrêt de la transmission (2).

5. Agencement d'entraînement (1) selon l'une quelconque des revendications précédentes, **caractérisé en ce que** l'élément d'embrayage (92) est un embrayage à griffes axial.

6. Agencement d'entraînement (1) selon l'une quelconque des revendications précédentes, **caractérisé en ce que** le dispositif de roue libre (7) comprend au moins une bague extérieure (44) montée sur l'élément tubulaire (91) au moyen d'un palier lisse, le palier lisse étant pressé sur l'élément tubulaire.

7. Agencement d'entraînement (1) selon la revendication 6, **caractérisé en ce qu'**il y a un jeu entre le palier lisse et la bague extérieure (44) dans la direction axiale.

8. Agencement d'entraînement (1) selon l'une quelconque des revendications précédentes, **caractérisé en ce que** l'entraînement à excentrique (9) peut être réglé au moyen d'un dispositif d'actionnement.

9. Agencement d'entraînement (1) selon la revendication 8, **caractérisé en ce que** le dispositif d'actionnement comprend un moteur de réglage (27), notamment un moteur électrique.

10. Agencement d'entraînement (1) selon la revendication 9, **caractérisé en ce que** le moteur de réglage (27) est disposé coaxialement à l'arbre d'entraînement (4) et tourne avec lui.

11. Agencement d'entraînement (1) selon la revendication 9 ou 10, **caractérisé en ce qu'**un engrenage réducteur (28) est prévu entre le moteur de réglage (27) et l'arbre d'entraînement.

12. Agencement d'entraînement (1) selon l'une quelconque des revendications précédentes, **caractérisé en ce que** l'arbre d'entraînement (4) est creux.

13. Agencement d'entraînement (1) selon l'une quelconque des revendications précédentes, **caractérisé en ce que** l'arbre entraîné (5) est l'essieu des roues arrière d'une motocyclette.

14. Agencement d'entraînement (1) pour un véhicule, contenant pour chaque roue entraînée du véhicule une transmission (2) pouvant être entraînée par un moteur (70), qui possède un arbre d'entraînement (4) pouvant être accouplé au moteur, et au moins un arbre entraîné (5) qui sont connectés l'un à l'autre par un entraînement à excentrique (9) prévu sur l'arbre d'entraînement et par un dispositif de roue libre (7) prévu sur l'arbre entraîné, un élément de connexion (8) étant prévu entre l'entraînement à excentrique et le dispositif de roue libre, et la transmission (2) pour chacune des roues entraînées (60) du véhicule étant indépendante de la transmission d'une autre roue entraînée du véhicule.

15. Agencement d'entraînement (1) selon la revendication 14, **caractérisé en ce que** l'entraînement à excentrique (9) de chaque transmission (2) peut être réglé au moyen d'un dispositif d'actionnement, le dispositif d'actionnement comprenant un moteur de réglage (27), notamment un moteur électrique, qui est disposé essentiellement coaxialement à l'arbre d'entraînement (4).

16. Agencement d'entraînement (1) selon la revendication 15, **caractérisé en ce qu'**entre le moteur de réglage (27) et l'arbre d'entraînement (4) est prévue une transmission intermédiaire (26), notamment un engrenage planétaire disposé concentriquement autour du moteur de réglage.

17. Agencement d'entraînement (1) selon l'une quelconque des revendications 14 à 16, **caractérisé en ce que** l'arbre d'entraînement (4) et l'arbre entraîné (5) de la transmission (2) ont la même orientation de l'essieu de chaque roue entraînée (60) du véhicule en conduite en ligne droite du véhicule.

18. Agencement d'entraînement (1) selon la revendication 17, **caractérisé en ce que** l'arbre entraîné (5) de la transmission (2) est l'essieu ou l'arbre de transmission (61) de la roue entraînée respective (60) du véhicule.

19. Agencement d'entraînement (1) selon l'une quelconque des revendications 14 à 18, **caractérisé en ce que** le véhicule est un véhicule avec deux roues entraînées (60) et deux transmissions (2) associées à chaque fois à une roue, l'agencement d'entraînement (1) comprenant un pignon conique (65), qui divise le couple du moteur (70) sur les arbres d'entraînement (4) des transmissions (2) de telle sorte que les arbres d'entraînement des transmissions présentent des sens de rotation opposés.

20. Agencement d'entraînement (1) selon la revendication 19, **caractérisé en ce que** le pignon conique (65) s'engrène avec l'arbre d'entraînement (4) d'une transmission, qui est connectée à l'arbre entraîné (4) de l'autre transmission par un moyeu avec une denture intermédiaire (67).

21. Agencement d'entraînement (1) selon la revendication 19 ou 20, **caractérisé en ce que** les arbres entraînés (5) sont des essieux d'entraînement communs des roues (60), à chaque transmission étant associée une machine électrique (32) pour produire un couple de poussée, les machines électriques possédant un stator commun (33) et un rotor propre respectif (36).

22. Agencement d'entraînement (1) selon la revendication 21, **caractérisé en ce que** pour la multiplication entre la machine électrique (32) et l'arbre entraîné (5), on utilise à chaque fois un engrenage planétaire (37).

23. Agencement d'entraînement (1) selon l'une quelconque des revendications 14 à 18, **caractérisé en ce que** le véhicule est un véhicule automobile avec deux roues entraînées (60), et deux pignons coniques (50) sont prévus, lesquels divisent le couple du moteur (70) aux arbres d'entraînement (4) des transmission (2), de telle sorte que les arbres d'entraînement des transmissions présentent des sens de rotation identiques.

24. Agencement d'entraînement (1) selon la revendication 23, **caractérisé en ce que** les dispositifs de roue libre (7) des transmissions sont prévus de telle sorte que les arbres entraînés (5) des transmissions présentent des sens de rotation identiques.

25. Agencement d'entraînement (1) selon l'une quelconque des revendications 14 à 18, **caractérisé en ce que** le véhicule est un véhicule automobile avec quatre roues entraînées (60), les deux transmissions (2) associées à un essieu d'entraînement commun des roues étant intégrées dans un boîtier commun (3).

26. Agencement d'entraînement (1) selon l'une quelconque des revendications 14 à 25, **caractérisé en ce que** les arbres d'entraînement (4) des deux transmissions (2) se trouvant sur un essieu commun présentent une configuration à symétrie spéculaire, de telle sorte que les couples libres et les forces de masse s'annulent.

27. Agencement d'entraînement (1) selon l'une quelconque des revendications 14 à 26, **caractérisé en ce que** les multiplications des transmissions (2) peuvent être ajustées indépendamment les unes des autres.

28. Agencement d'entraînement (1) selon l'une quelconque des revendications précédentes, **caractérisé en ce qu'**une machine électrique (32) est prévue pour produire un couple de poussée qui peut être connecté au moyen d'au moins un élément de commutation (104) de manière sélective seulement au côté de sortie de la transmission (2) ou seulement au côté d'entraînement de la transmission (2) ou simultanément au côté de sortie et au côté d'entraînement.

29. Agencement d'entraînement (1) selon la revendication 28, **caractérisé en ce qu'**il est prévu un dispositif d'actionnement (26, 27, 28) pour le réglage de l'entraînement à excentrique (9), et l'élément de commutation (104) en fonction de la position de réglage de l'entraînement à excentrique provoque une connexion de la machine électrique (32) au côté d'entraînement de la transmission et/ou au côté de sortie de la transmission.

30. Agencement d'entraînement (1) selon la revendication 29, **caractérisé en ce que** la position de réglage est une position angulaire d'un arbre de réglage (17) pour l'entraînement à excentrique (9).

31. Agencement d'entraînement (1) selon la revendication 30, **caractérisé en ce que** le dispositif d'actionnement comprend un moteur de réglage (27) et un élément de transmission (28) introduisant un mouvement angulaire dans l'arbre de réglage, au moins une came (102) représentant la position angulaire de l'arbre de réglage étant prévue sur le moteur de réglage et/ou sur l'élément de transmission, avec laquelle l'au moins un élément de commutation (104) coopère de telle sorte qu'il provoque, en fonction de la position angulaire de la came, une connexion de la machine électrique (32) avec le côté d'entraînement de la transmission et/ou le côté de sortie de la transmission.

32. Agencement d'entraînement (1) selon la revendication 31, **caractérisé en ce que** l'élément de transmission (28) est un dispositif de transmission, notamment un engrenage planétaire, et la came (102) est prévue sur la périphérie extérieure de la sortie du dispositif de transmission, en particulier de la couronne dentée de sortie (101) de l'engrenage planétaire.

33. Agencement d'entraînement (1) selon l'une quelconque des revendications 31 ou 32, **caractérisé en ce que** l'au moins un élément de commutation (104) est déplacé par l'au moins une came (102) et peut créer un accouplement par engagement par correspondance géométrique entre un induit (36) de la machine électrique et l'arbre d'entraînement ou un composant connecté fixement à l'arbre d'entraînement.

34. Agencement d'entraînement (1) selon la revendication 33, **caractérisé en ce que** l'élément de commutation (104) est un boulon ou une goupille.

35. Agencement d'entraînement (1) selon l'une quelconque des revendications 28 à 34, **caractérisé en ce que** la machine électrique (32) peut être connectée au côté d'entraînement de la transmission (2) par le biais d'un dispositif multiplicateur (106).

36. Agencement d'entraînement (1) selon l'une quelconque des revendications 28 à 35, **caractérisé en ce que** la machine électrique peut être connectée par le biais d'un dispositif multiplicateur (106) au côté de sortie de la transmission (2).

37. Agencement d'entraînement (1) selon l'une quelconque des revendications précédentes, **caractérisé en ce que** le dispositif de roue libre (7) comprend au moins une unité de roue libre (10) qui présente des corps de serrage (42) qui sont disposés entre une bague interne (50) et une bague externe (44) de telle sorte que les corps de serrage bloquent cette rotation dans au moins un sens de rotation relatif entre la bague interne et la bague externe, de sorte que les deux bagues soient tournées ensemble.

38. Agencement d'entraînement (1) selon la revendication 37, **caractérisé en ce que** la bague interne (50) est formée par la surface extérieure de l'arbre entraîné (5) pourvue d'un profil polygonal, et deux flancs (51, 52) du profil polygonal sont associés de préférence à chaque corps de serrage (42).

39. Agencement d'entraînement (1) selon l'une quelconque des revendications 37 à 38, **caractérisé en ce que** les corps de serrage sont des rouleaux (42).

40. Agencement d'entraînement (1) selon l'une quelconque des revendications 37 à 39, **caractérisé en ce qu'**il est prévu en outre un dispositif de pressage (75, 96, 110) pour les corps de serrage (42), lequel, dans la position de repos, presse les corps de serrage (42) contre la bague interne (50) et/ou la bague externe (44), le pressage contre la bague interne s'effectuant de préférence suivant un angle proche de la limite d'autoblocage, de telle sorte que les corps de serrage se trouvent dans la position dans laquelle ils bloquent la rotation de la bague interne par rapport à la bague externe.

41. Agencement d'entraînement (1) selon la revendication 40, **caractérisé en ce que** le dispositif de pression comprend un élément de ressort (75, 96, 110) qui est monté entre deux corps de serrage adjacents, en particulier un ressort à deux branches.

42. Agencement d'entraînement (1) selon la revendication 41, **caractérisé en ce que** l'élément de ressort (75) est monté sur un composant de goupille (73) de manière rotative par rapport à la bague interne et la bague externe, le corps de serrage (42) étant de préférence amené dans l'une de trois positions par le pivotement de l'élément de ressort, ces trois positions étant une position d'engagement par force entre la bague interne et la bague externe pour un premier sens de rotation, une position d'engagement par force entre la bague interne et la bague externe pour un deuxième sens de rotation et une position neutre.

43. Agencement d'entraînement (1) selon la revendication 42, **caractérisé en ce qu'**un composant de goupille (73) est prévu entre à chaque fois deux corps de serrage adjacents (42).

44. Agencement d'entraînement (1) selon l'une quelconque des revendications 42 à 43, **caractérisé en ce qu'**une roue dentée (114) connectée fixement au composant de goupille est prévue sur l'extrémité libre du composant de goupille, les roues dentées des composants de goupille étant entourées par une couronne dentée (115) pouvant être entraînée conjointement et s'engrenant avec elle.

45. Agencement d'entraînement (1) selon l'une quelconque des revendications 42 à 45, **caractérisé en ce que** le composant de goupille (73) est une barre profilée montée avec un disque (74) pouvant tourner par rapport à la bague interne et à la bague externe, l'élément de ressort (75) étant solidaire en rotation par rapport à la barre profilée.

46. Agencement d'entraînement (1) selon la revendication 45, **caractérisé en ce que** la barre profilée (73) possède un contour qui présente deux surfaces (73a) pour une butée d'un corps de serrage (42) et dont les autres surfaces (73b) possèdent une courbure de manière à déplacer le corps de serrage d'une position d'engagement par force entre la bague interne et la bague externe pour un premier sens de rotation dans une autre position d'engagement par force entre la bague interne et la bague externe pour un deuxième sens de rotation avec une moindre application de force.

47. Agencement d'entraînement (1) selon l'une quelconque des revendications 40 à 46, **caractérisé en ce que** le dispositif de pression produit une force de pression (F_{RES}) qui est la somme de deux composantes de force appliquées individuellement (F₁, F₂).

48. Agencement d'entraînement (1) selon la revendication 47, **caractérisé en ce que** l'élément de ressort (96) est un ressort à lame essentiellement en forme de V, qui applique une force de pression sur chacun des corps de serrage (42) adjacents avec chacune de ses branches.

49. Agencement d'entraînement (1) selon la revendication 47, **caractérisé en ce que** l'élément de ressort est un ressort à lame en S (110) qui applique une force de pression sur chacun des corps de serrage adjacents (42) avec chacune de ses branches.

50. Agencement d'entraînement (1) selon la revendication 49, **caractérisé en ce que** le ressort à lame en S (110) est monté à rotation, le centre de rotation se trouvant sur une ligne de connexion des points de contact du ressort (110) avec les deux corps de serrage adjacents (42) ou à une distance perpendiculaire à cette ligne, constituant au maximum ¼ de la longueur de la ligne.

51. Agencement d'entraînement (1) selon l'une quelconque des revendications 49 ou 50, **caractérisé en ce que** l'unité de roue libre comprend en outre un palier lisse (55) entre deux corps de serrage adjacents, le ressort à lame en S (110) étant monté sur le palier lisse.

52. Agencement d'entraînement (1) selon l'une quelconque des revendications 49 à 51, **caractérisé en ce que** le ressort à lame en S (110) est un support à contrainte de flexion constante et section transversale variable.

53. Agencement d'entraînement (1) selon l'une quelconque des revendications 49 à 51, **caractérisé en ce que** le ressort à lame en S (110) est réalisé sous forme de composant stratifié constitué de plusieurs tôles de ressort.

54. Agencement d'entraînement (1) selon l'une quelconque des revendications 37 à 53, **caractérisé en ce qu'**il est prévu un dispositif de pression de base supplémentaire (98) qui presse les corps de serrage (42) avec une force de pression de base contre la bague extérieure (44).

55. Agencement d'entraînement (1) selon l'une quelconque des revendications 37 à 54, **caractérisé en ce qu'**un palier lisse (55) est prévu entre la bague interne et la bague externe, lequel repose de manière solidaire en rotation sur la bague interne (50) et centre la bague externe (44) par rapport à la bague interne.

56. Agencement d'entraînement (1) selon la revendication 55, **caractérisé en ce que** le palier lisse (55) est réalisé sous forme de profilé en L.

57. Agencement d'entraînement (1) selon la revendication 55 ou 56, **caractérisé en ce que** plusieurs sabots coulissants (56) sont montés dans la direction périphérique sur la surface extérieure radiale du palier lisse (55), et centrent la bague externe (44).

58. Agencement d'entraînement (1) selon la revendication 57, **caractérisé en ce que** chaque sabot coulissant présente deux surfaces (56a, 56b) cintrées orientées vers l'intérieur dans la direction radiale, pour le support du corps de serrage (42).

59. Agencement d'entraînement (1) selon l'une quelconque des revendications 55 à 58, **caractérisé en ce qu'**il est prévu un disque de terminaison (58) qui forme conjointement avec le palier lisse (56) une cage pour les corps de serrage (42).

60. Utilisation d'un dispositif de roue libre (7) dans un agencement d'entraînement (1) selon l'une quelconque des revendications 37 à 59, le dispositif de roue libre (7) comprenant au moins une unité de roue libre (10), qui présente des corps de serrage (42) qui sont disposés entre une bague interne (50) et une bague externe (44) de telle sorte que les corps de serrage bloquent cette rotation dans au moins un sens de rotation relatif entre la bague interne et la bague externe, de sorte que les deux bagues soient tournées ensemble.
